(19) Europäisches Patentamt / European Patent Office / Office européen des brevets

(11) EP 2 896 875 B1

(12) **EUROPEAN PATENT SPECIFICATION**

(45) Date of publication and mention
of the grant of the patent:
**22.05.2019 Bulletin 2019/21**

(51) Int Cl.:
*F21S 8/00* (2006.01)    *F21V 19/00* (2006.01)
*F21V 23/00* (2015.01)    *F21W 131/103* (2006.01)
*F21W 131/101* (2006.01)    *F21Y 115/10* (2016.01)

(21) Application number: **13837609.0**

(22) Date of filing: **11.09.2013**

(86) International application number:
**PCT/CN2013/083351**

(87) International publication number:
**WO 2014/040540 (20.03.2014 Gazette 2014/12)**

(54) **MULTI-DIMENSIONAL STREET LIGHTING SYSTEM**

MEHRDIMENSIONALES STRASSENBELEUCHTUNGSSYSTEM

SYSTÈME D'ÉCLAIRAGE DE RUES MULTIDIMENSIONNEL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:
**11.09.2012 CN 201210334214
11.09.2012 CN 201210334215
11.09.2012 CN 201210334213
11.09.2012 CN 201210334212
11.09.2012 CN 201210334282
11.09.2012 CN 201210334281**

(43) Date of publication of application:
**22.07.2015 Bulletin 2015/30**

(73) Proprietor: **Shenzhen University
Shenzhen, Guangdong 518060 (CN)**

(72) Inventor: **ZHAO, Haitian
Shenzhen
Guangdong 518060 (CN)**

(74) Representative: **Fuchs Patentanwälte
Partnerschaft mbB
Westhafenplatz 1
60327 Frankfurt am Main (DE)**

(56) References cited:
EP-A1- 2 148 129    WO-A1-98/33007
WO-A1-2009/121589    WO-A1-2011/092107
CN-A- 101 021 300    CN-A- 101 769 501
CN-A- 102 798 065    CN-A- 102 840 519
CN-A- 102 865 509    CN-A- 102 889 513
CN-A- 102 889 514    CN-A- 102 889 515
CN-U- 201 496 840    CN-U- 201 606 756
CN-U- 203 099 501    CN-U- 203 115 664
CN-U- 203 147 458    FR-A- 749 910
FR-A- 765 953    JP-A- 2002 170 401
US-A1- 2011 074 313    US-A1- 2011 235 333

**Description**

FIELD

The present invention relates to illumination technology and, more particularly, to a multi-dimensional road lighting system for use in highways, municipal roads and tunnels.

BACKGROUND

Current highway, municipal road and tunnel lighting systems are designed according to the lighting standard (2006), which generally use HID lamps as the light sources. The light sources for highways and municipal roads have a mounting height of 10m to 14m, a mounting spacing of 30m to 40m, and a single-lamp's power of about 250W. The light sources for tunnels are mounted on the top of the tunnels at a spacing of about 2m and have a single-lamp's power of about 80 to 250W. Lighting in the tunnel follows the bat-wing type distribution curve flux, which is characterized by a high single-lamp's power, high lamp installing position and large mounting spacing. These constitute the current road lighting system which can be generalized as special lamps arranged in a large power and concentrated lighting type. This road lighting system has a long history and is a mature technology. However, it has the following issues. US 2011/235333 A1 discloses a lighting device that can be configured to have a depth dimension that is smaller than a conventional lighting device, and to provide a desired light distribution pattern without any adjustment of the angular postures of a plurality of components such as reflecting minors, projection lenses, and the like while the lighting device can prevent glare light from occurring toward a driver of an oncoming vehicle even if the lighting device is disposed at a lower position, for example, 1 m high from a road surface. FR 749 953 A discloses a road pavement lighting substantially parallel to the roadway, arranged and oriented along the lanes to be illuminated permanently such that the rays emitted by their light sources, their direct beams, as well as the secondary beams coming from the reflections of the direct beams on the roadway, can not in any case directly strike the eyes of the users of the road flowing parallel to the axis of the roadway, in one direction or the other, or crossing the roadway normally at its axis. FR 749 910 A discloses an improvement made to the means to ensure the lighting of traffic places such as, in particular, the arteries of an agglomeration for providing illumination of traffic places comprising two sets of light sources, arranged and possibly equipped with screens, reflectors or diffusers. WO 98/33007 A1 discloses a luminaire comprising a set, for example a few dozen, of lighting units which each comprise at least one LED chip and an optical system cooperating therewith, said LED chips and optical systems forming the light source and the optical means, respectively, while the lighting units illuminate portions of the object during operation, and the LED chips each supply a luminous flux of at least 5 lm during operation. WO 2011/092107 A1 discloses a street lighting device with a first light source for illuminating the street plane from above and a further light source located at a position closer to the street plane than the first light source. EP 2 148 129 A1 discloses a system for lighting a tunnel or an underpass having an illumination device which is arranged in the area of the side walls of the tunnel or the subway, wherein a lighting unit is formed to emit light below a relative surface at horizontal angle touching the base surface of the tunnel or the subway, and another lighting unit is formed to direct light touching on the side wall of the tunnel or subway. JP 2002 170401 A discloses a tunnel lighting fixtures and road illumination apparatus to make it possible for a vehicle driver to visually recognize obstacles existing inside a tunnel even when the road in a tunnel has a low road surface reflection factor. WO2009121589 A1 discloses a light which is intended particularly for the illumination of paths, pedestrian overpasses, or plazas, having a ring-like light housing which is designed to be attached on the outer perimeter of a support element, particularly on a lamppost, wherein several substantially point-shaped light sources are arranged on or in the light housing and radiate light in different directions.

1. Glare issue

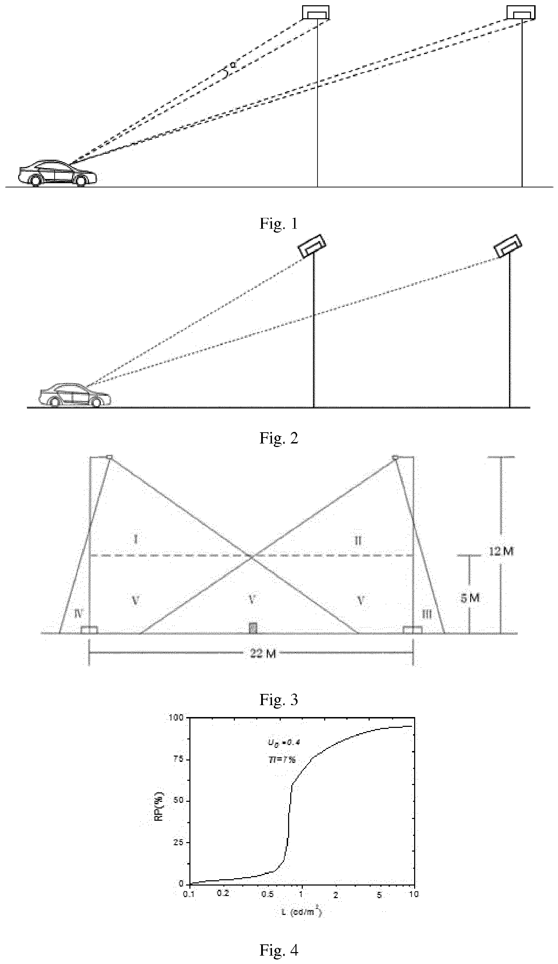

Currently, the highway, municipal road and tunnel lighting uses cut-off or semi-cut-off road lamps to reduce glare. These measures can depress but cannot eliminate glare. There is always a high luminance luminous surface in the cut-off road lamps. A height difference H exists between the luminous surface and a driver, such that there always exists a view angle $\alpha$ at which the driver can look straight at the luminous surface, which makes the driver feel the glare of the luminous surface of the top front road lamp (see Fig. 1). This is how the glare is generated. The sufficient condition for the existence of glare is $\alpha>0$.

In order to avoid $\alpha>0$, there are two measures. One measure is to obliquely arrange the light such that the luminous surface of the light is parallel to the sight line of the driver toward the light (see Fig. 2), which results in $\alpha = 0$. However, as the vehicle is moving, $\alpha$ is changing constantly. Therefore, this measure cannot eliminate the glare when the vehicle is at different positions. At the same time, for express ways, highways and municipal roads, the oblique luminous surface may illuminate an opposite lane, which intensifies the glare to the driver on the opposite lane. Therefore, this measure is infeasible.

Another measure is to lower the height of lamp. When the lamp is at the same height of the eye level of drivers, it results in $\alpha = 0$. However, this measure may cause problems in light distribution. In particular, it is infeasible to lower the existing 250W-400W HPS lamps to the height of the eye level of drivers.

For municipal road lighting, the high-position installed lamps inevitably generate light pollutions to nearby residences. For tunnel lighting, the lighting type with high-position installed lamp that is used also leads to the significant glare issue.

In summary, the significant glare issue exists in the current road lighting system for highways, municipal roads as well as tunnel lighting and needs to be addressed.

2. Invalid illumination issue

In order to increase uniformity of illuminance, the current road lighting system illuminates the space below the lights as uniformly as possible to form a light curtain. Fig. 3 illustrates the light curtain of the current road lighting system for highways and municipal roads.

For closed highways, the vehicle drivers need only observe the road surface and the road ahead without the need of observing objects outside the road. Therefore, the road lighting system does not need an illuminating space at a height of about 10m to 14m above the road surface. The illuminating space may be lowered to a half or even lower. The drivers mainly rely on illumination in such a lowered illuminating space to identify the road or obstacles ahead. The illuminating space within such a height is referred to as a valid light curtain. Only a valid component in the valid light curtain is regarded as valid illumination. Invalid illumination includes illumination in an invalid light curtain and an invalid component in the valid light curtain.

Apparently, a large scope of invalid light curtain exists in the current road lighting system, which occupies approximately a half of the whole illuminating scope.

It can be proved according to the law of cosines that, even in the valid light curtain resulted from a removal of the invalid light curtain from the whole light curtain, there still exists a large proportion of invalid illuminating component in the current road lighting system.

On the other hand, according to the law of the inverse square, the current road lighting system has a top-bright-and-bottom-dark vertical illuminance distribution. The makes the upper invalid light curtain has a higher illuminance than the lower valid light curtain, which is apparently contrary to the driver's basic need for a top-dark-and-bottom-bright vertical illuminance distribution.

Therefore, the current road lighting system has a large amount of invalid illumination and violates the basic illumination need.

3. Low visibility issue

In the current road lighting system, the luminaire mounting spacing is 30m to 40m, which makes it difficult in providing a uniform vertical illuminance in the movement direction of the vehicle (this is different from the "pedestrian crossing" in the context of horizontal luminance). Study shows that the vertical illuminance in some areas is very low or even close to zero.

As we know, there is a positive correlation between the surface luminance of objects ahead and the vertical illuminance, and the luminance and visibility of the objects ahead also have a graded positive correlation within a mesopic vision range (see Fig. 4).

As can be seen from Fig. 4, when the average luminance is lowered to 0.1 to 0.5cd/m$^2$, the visibility is reduced to below 20%.

This indicates that the main stream lighting system produces areas with very low visibility.

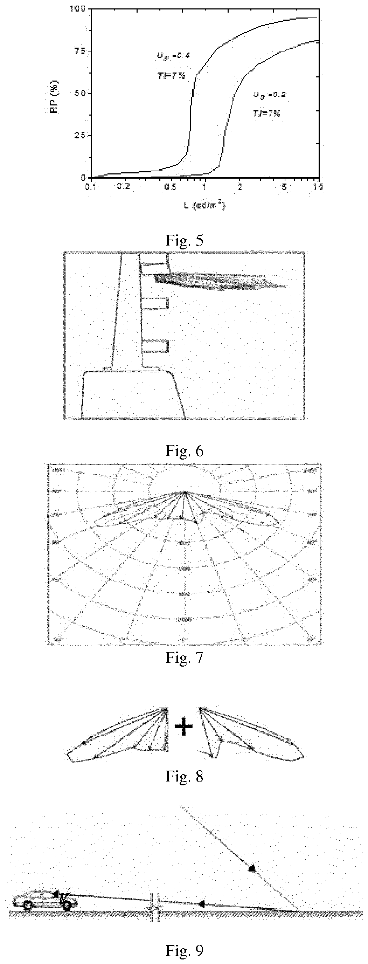

In addition, the non-uniform vertical illuminance results in the space ahead in the driving direction having a non-uniform luminance (with alternate bright and dark areas) and also reduces the visibility RP value of the objects ahead (see Fig. 5). The non-uniform vertical illuminance not only produces dark areas with low visibility, but it also reduces the overall visibility.

4. Issue of the light blocked by trees

For municipal roads, the lamp arrangement of the current road lighting system mostly adopts an enclosed layout, in which the road lamps and street trees are arranged in the same space. During the early stage after the road is built, the street trees are small and much lower than the road lamps, which do not affect the road lamp illumination. Years later, as the street trees grow up, leaves of the trees enclose the road lamps, thus blocking part or even a majority of the light projected from the road lamps toward the road surface, which makes the road lamps exist in name only. Currently, the only way of addressing this issue is to cut down or frequently trim the trees. Cutting down the trees is of course inadvisable. Trimming the trees can hardly be done timely and also blocks the traffic and causes the waste of manpower and energy.

The above analysis indicates that the current large power and concentrated road lighting system is the fundamental reason for the glare issue, invalid illumination issue, low visibility issue and the issue of the light blocked by trees.

The current road lighting system was developed along with the application of high intensity discharge (HID) and its drawbacks have emerged. With the invention of new light source such as LED, more advanced lighting type will be inevitably developed.

LED has the characteristics of high luminance, small size, high color rendering, low voltage safety and the capability of distributed installation, which makes it possible to address the four issues above by mean of small power and distributed illumination.

However, the current application and research of LED mainly focuses on a simple replacement of the traditional light sources with LEDs. Almost all LED companies continue to use the traditional road lamp design to pursue high power LED road lamps to make their lamp shape and mounting manner the same as or compatible with the current HID road lamps. Therefore, almost all current LED road lamps, tunnel lights and their mounting manners are designed and manufactured based on the standard of snake-head-like (flat snake-head) lights /spot lights.

LED light sources with small power are suitable for distributed installation, which do not have the serious heat dissipation issue. However, the lighting type with concentrated and high-position installed LED road lamps and tunnel lights with high power causes the issues of poor heat dissipation, poor durability and inconvenience in maintenance that should have not arisen, which leads to a series of functional and quality issues. The LED road lamps and tunnel lights as a result of a simple replacement of the light sources fail to address the issues of the traditional HID road lamps and tunnel lights. Instead, they bring new issues such as the heat dissipation issue. Therefore, the LED road lamps/tunnel lights are being questioned in the illumination engineering field.

In fact, replacing the HID light sources with the LED light sources does not change the lighting type, which cannot address the above four issues of the current road lighting system. Therefore, the research and development of LED road lamps/tunnel lights need to abandon the simple replacement thinking and need to be conducted independently according to the LED's own characteristics and advantages.

Recently, the lighting type with low-position installed road lamp has emerged. In the lighting type with low-position installed road lamp, lamps are directly mounted on a road fence or median strip, which project light to the road surface to satisfy the illumination needs of the road surface.

China Patent Application No. 201110175282.5 discloses a bidirectional low-position installed LED road lamp which uses LED as the light source. It is basically a road fence lamp. Different from a common road fence lamp that provides single side illumination, it provides double side illumination. It has been found that the road fence lamp cannot satisfy the specifications for express way lighting.

China Patent Application No. 200720095548.4 discloses a low-position installed road lamp which uses an MH lamp as the light source. The mounting spacing of the low-position installed road lamp is 8m to 11m and the mounting height is less than 1.2m. This lighting type with low-position installed lamp partly addresses the issue of large invalid light curtain that exists in the lighting type with high-position installed road lamp. If the LED light source is used, it may partly address the heat dissipation issue that exists in the LED light source with high power. However, this low-position installed road lamp still has the following issues:

1. Low lighting efficiency

This lighting type with low-position installed lamp addresses, to some extent, the issue of large invalid light curtain that exists in the lighting type with high-position installed road lamp. However, the spacing between the light sources are reduced, which leads to an increased lateral illumination component and very small forward and backward illumination components. Analysis shows that the lateral illumination is not a valid illumination for road lighting, which provides very little contribution to providing the basic road surface luminance, providing the surface luminance of the objects ahead and increasing the luminance difference between the objects ahead and the road surface background in order for the driver to observe the road and objects ahead under normal weather conditions.

In fact, the lighting type disclosed in China Patent Application No. 200720095548.4 is not apparently advantageous over the current road lighting system regarding power density - the main energy conservation specification. In addition, no spot test illumination parameters or systematic study results have been published so far.

2. Low visibility level

In this lighting type with low-position installed lamp, the backward and forward lighting components are provided by the same light source and lamp, which have the same chromaticity and illumination space. Therefore, high luminance difference and chromaticity difference between the road surface background and the object ahead cannot be established. In addition, the road surface has a low uniformity of luminance, which leads to a low visibility of the object ahead.

3. In this lighting type with low-position installed lamp, all light radiations are concentrated within the height of 1.5 meters above the road, which cannot provide the necessary space illuminance for the driver to observe the obstacles ahead.

4. This lighting type with low-position installed lamp does not completely eliminate the glare. Within the driver's visual field, the driver can still feel the glare from the front side lamps (because their mounting height is 1.2m).

5. This lighting type with low-position installed lamp has the stroboscopic issue, which easily causes visual fatigue of the driver.

Jiaozhou Bay Bridge at Shandong province is a recent project that adopts the large scale lighting type with low-position installed lamp. With a total length of 41.58 kilometers and a road width of 35 meters, this bridge has bidirectional six lanes and partially eight lanes. The bridge uses 9.7W small power LED lamps that are mounted on the road fence at a height of 1.2m.

As measured on the spot by Architecture physics lab of Shenzhen University, the low-position LED lighting adopted in the Jiaozhou Bay Bridge project can partially overcome the shortcomings of the conventional lighting type with high-position installed lamps (e.g. the invalid illumination issue). However, there are still two prominent problems. Firstly, the current standard is formulated based on the high-position installed road lamp. Some specifics of this project do not satisfy the current standard and, therefore, this project cannot pass completion acceptance. Secondly, although the lighting type with low-position installed lamps in this project eliminates the glare from the top front road lamp in the lighting type with high-position installed lamps, it produces severe front side glare. Especially, the front luminous surface of the high luminance luminaire significantly affects drivers who are driving on the lane close to the road lamps.

Recently, depressing glare by means of downward light radiation was studied in which the lamps are disposed below the visual line of the driver and the road surface obtains the necessary luminance through light distribution design. This illumination method causes two problems. Firstly, all the light radiations are concentrated within the height of 1.2 meters above the road surface, which takes into account of only the road surface lighting but not the obstacles ahead. Secondly, this illumination method does not completely eliminate the glare and the driver can still feel the glare from the "luminous surface" of the front side lamps. In fact, this illumination method has not been found to be put into practice.

There are research literatures that discuss comprehensive evaluation systems of road lighting quality of low-position installed road lamps. However, these evaluation systems are based on the current lighting standard, in which the dominant evaluation indicator is the road surface luminance (horizontal illuminance) rather than the most important indicator of road lighting - the visibility of the obstacles ahead.

In summary, in essence, in the lighting type with high-position installed lamps and the lighting type with low-position installed lamp, one lamp is used to fulfil three tasks simultaneously - road surface lighting, space lighting as well as lighting under complicated weather conditions/wall lighting. These tasks are mutually restricted in space and time and cannot be all optimized at the same time. In addition, there is strong glare coming from the side lamps, or the road surface luminance is insufficient. Therefore, these two lighting types were not large-scale promoted. Logically, only when the above tasks are separated apart and each task is executed independently by a small power, high efficiency light source, lamp and lighting control system, the road surface lighting, space lighting and lighting under complicated weather conditions/tunnel wall lighting can be respectively optimized to achieve an overall optimized result.

SUMMARY

The problem to be solved by the present invention is to develop a new road lamp solution superior over the traditional lighting type, which systematically and comprehensively addresses the glare, invalid illumination and poor visibility issues that exist in the current road lighting system, and significantly increases the lighting efficiency and visibility, thus providing a scientific lighting technology basis and useful equipment for new roads or reconstruction of existing roads.

To address the above technical problem, the present invention provides a multi-dimensional road lighting system according to claim 1. Further improvements and embodiments are provided in the dependent claims.

Also provided is a multi-dimensional road lighting system including a multi-dimensional lighting type and luminaire dedicated for the multi-dimensional lighting type, which is used in highway, municipal road and tunnel lighting. The multi-dimensional road lighting system includes multiple dimensions of lighting subsystems including at least one dimension of backward lighting subsystem, one dimension of forward lighting subsystem and one dimension of lateral lighting subsystem. The lighting subsystems are formed by physical light sources. A light projecting direction of the backward lighting subsystem is opposite to the driving direction, a light projecting direction of the forward lighting subsystem is the same as the driving direction, and a light projecting direction of the lateral lighting subsystem is perpendicular to the driving direction.

In comparison with the prior art, the multi-dimensional road lighting system of the present invention includes ten comparatively perfect subsystems which can at the same time or selectively provide multiple dimensions of space lighting. The present invention can be used in highways, municipal roads and tunnels. The present invention is capable of addressing the disadvantages of the traditional lighting type with high-position installed lamps and the existing lighting type with low-position installed lamps. The present invention addresses the issues of glare, invalid illumination and poor longitudinal uniformity, significantly increases the lighting efficiency and power consumption and, at the same time, provides good road lighting photometry indexes and excellent cost/performance ratio, which can be used in lighting of new roads and reconstruction of existing road lamp systems.

BRIEF DESCRIPTION OF THE DRAWINGS

Fig. 1 illustrates glare in the current lighting type with high-position installed lamp.

Fig. 2 illustrates that the glare cannot be eliminated from the current lighting type with high-position installed lamp.

Fig. 3 illustrates a light curtain in the current lighting type with high-position installed lamp.

Fig. 4 illustrates the relationship between the average road surface luminance and visibility RP.

Fig. 5 illustrates the relationship between the uniformity of luminance and visibility RP.

Fig. 6 illustrates a side-type light distribution.

Fig. 7 illustrates a typical bat-wing type distribution curve flux of a road lamp.

Fig. 8 illustrates vector decomposition of light intensity of road lamp distribution curve flux.

Fig. 9 illustrates "forward lighting".

Fig. 10 illustrates "backward lighting".

Fig. 11 is a diagram analysing the relationship between the space illuminance components in various directions.

Fig. 12 illustrates an experimental platform for the forward lighting with high-position installed lamp and with low-position installed lamp..

Fig. 13 illustrates an experimental platform for the backward lighting with high-position installed lamp and with low-position installed lamp..

Fig. 14 is a plane view of backward lighting with low-position installed lamp of the present invention.

Fig. 15 illustrates a horizontal direction of the backward lighting with low-position installed lamp of the present invention.

Fig. 16 illustrates an elevation view of the backward lighting with low-position installed lamp of the present invention.

Fig. 17 illustrates a vertical direction of the backward lighting with low-position installed lamp of the present invention.

Fig. 18 is an analysis chart of driver retinal illuminance reflected from an obstacle ahead.

Fig. 19 illustrates a spectral distribution curve of yellow LED.

Fig. 20 illustrates a spectral distribution curve of white LED.

Fig. 21 is an analysis chart of visual acuity in case of positive contrast.

Fig. 22 is an analysis chart of visual acuity in case of negative contrast.

Fig. 23 is a scatter diagram of experiment group luminance contrast and visual acuity average.

Fig. 24 is a scatter diagram of comparison group luminance contrast and visual acuity average.

Fig. 25 is a plane view of the forward lighting of the present invention.

Fig. 26 illustrates the luminance gradient in the near-ground space in the forward lighting of the present invention.

Fig. 27 illustrates a horizontal direction of the forward lighting of the present invention.

Fig. 28 is an elevation view of the forward lighting of the present invention.

Fig. 29 illustrates a vertical direction of the forward lighting of the present invention.

Fig. 30 is a plane view of the lateral lighting of the present invention.

Fig. 31 illustrates a horizontal direction of the lateral lighting of the present invention.

Fig. 32 illustrates a vertical direction of the lateral lighting of the present invention.

Fig. 33 is an elevation view of the vertical lighting of the present invention.

Fig. 34 illustrates a vertical direction of the vertical lighting of the present invention.

Fig. 35 illustrates a lamp for tunnel high-position backward lighting of the present invention.

Fig. 36 illustrates a horizontal direction of the tunnel high-position backward lighting of the present invention.

Fig. 37 illustrates a vertical direction of the tunnel high-position backward lighting of the present invention.

Fig. 38 illustrates the center line single row lamp distribution of the present invention employed in the municipal road.

Fig. 39 illustrates the center line single row lamp distribution plus side lamp distribution of the present invention.

Fig. 40 illustrates the display illumination of the present invention employed in the municipal road.

Fig. 41 is a plane view of the shutter type anti-glare grid of the present invention.

Fig. 42 illustrates the position of the photovoltaic solar panel of the LED lamp of the present invention.

Fig. 43 illustrates the luminaire employed in the highway according to one embodiment of the present invention.

Fig. 44 illustrates the outside wire connection of the luminaire employed in the highway according to one embodiment of the present invention.

Fig. 45 illustrates the luminaire employed in the highway according to one embodiment of the present invention.

Fig. 46 illustrates the luminaire employed in the highway according to one embodiment of the present invention.

Fig. 47 is a side perspective view of a center-line-type floor model lamp employed in the municipal road according to one embodiment of the present invention.

Fig. 48 is a front perspective view of the center-line-type floors model lamp employed in the municipal road according to one embodiment of the present invention.

Fig. 49 is a side perspective view of the center-line-type floor model lamp employed in the municipal road according to one embodiment of the present invention.

Fig. 50 is a top view of the center-line-type floor model lamp employed in the municipal road according to one embodiment of the present invention.

Fig. 51 is a side perspective view of a center-line straddle type lamp employed in the municipal road according to one embodiment of the present invention.

Fig. 52 is a front perspective view of the center-line straddle type lamp employed in the municipal road according to one embodiment of the present invention.

Fig. 53 is a side perspective view of the center-line straddle type lamp employed in the municipal road according to one embodiment of the present invention.

Fig. 54 is a top view of the center-line straddle type lamp employed in the municipal road according to one embodiment of the present invention.

Fig. 55 is a side perspective view of a side type floor model lamp employed in the municipal road according to one embodiment of the present invention.

Fig. 56 is a front perspective view of the side type floor model lamp employed in the municipal road according to one embodiment of the present invention.

Fig. 57 is a top view of the side type floor model lamp employed in the municipal road according to one embodiment of the present invention.

Fig. 58 illustrates the mounting of the high-position installed luminaire of backward lighting in the tunnel according to one embodiment of the present invention.

Fig. 59 illustrates the low-position installed backward, forward and lateral lighting luminaire in the tunnel according to one embodiment of the present invention.

Fig. 60 illustrates a center line straddle type lamp arrangement employed in the municipal road according to one embodiment of the present invention.

Fig. 61 illustrates a lamp arrangement employed in the tunnel lighting according to one embodiment of the present invention.

Fig. 62 is a front view of Fig. 61.

Fig. 63 is a cross sectional view of Fig. 61.

Fig. 64 is a top view of Fig. 61.

DESCRIPTION OF THE EMBODIMENTS

In order to make the objectives, technical solutions and advantages become more apparent, more detailed description of the present invention is made below with reference to the drawings and embodiments. It is to be understood that the specific embodiments explained herein are intended for the purpose of description only and shall not be used to limit the present invention.

Study shows that the basic requirements for highway, municipal road and tunnel lighting road lighting include providing basic road surface lighting, providing space lighting in front of the car, strengthening lighting under complicated weather conditions, providing accident spot lighting, strengthening special road section lighting and suppressing glare.

To this end, the inventor conducted a systematic theoretical and experimental study. Under the guidance of the study results, the present invention provides a new solution for road lighting - multi-dimensional road lighting system.

The multi-dimensional road lighting of the present invention includes ten main subsystems, which is based on the following theory and includes the following technical measures.

1. Road surface lighting for the purpose of increasing lighting efficiency -backward lighting subsystem with low-position installed lamps

The road surface is the main background of the obstacles ahead and, therefore, providing the necessary road surface luminance is the basic requirement for highway, municipal road and tunnel lighting, and reducing glare and increasing uniformity of luminance are the basic tasks for road lighting.

The following theory deduction and experiments show that the lighting type with low-position installed lamps is the most efficient road surface lighting type among all lighting types. This conclusion is the basis of providing the present multi-dimensional road lighting system with the backward lighting subsystem with low-position installed lamps.

(1) Theory deduction: retinal illuminance in the backward lighting

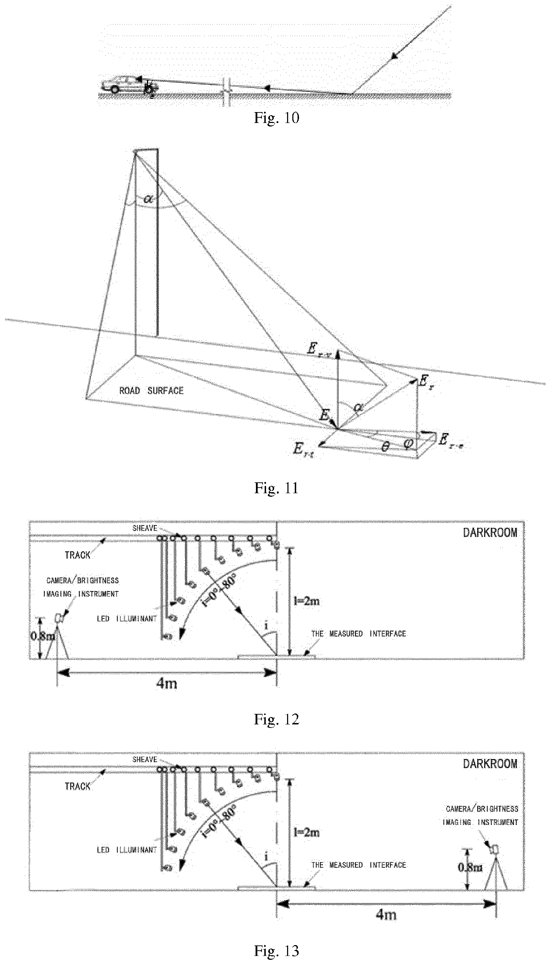

Current road lighting generally adopts a bat-wing type distribution curve flux (Fig. 7). The light intensity vector of Fig. 7 may be decomposed into leftward and rightward light intensity components that correspond to the radiation direction that is the same as the driving direction and the reverse direction (Fig. 8). Forward lighting (Fig. 9) refers to the situation where the light radiation direction is the same as the driving direction, and backward lighting (Fig. 10) refers to the situation where the light radiation direction is opposite to the driving direction. The bat-wing type distribution curve flux is a combination of the forward lighting and backward lighting.

The relationship between the various illuminance components in the backward lighting is illustrated in Fig. 11. Where the lamps disposed on opposite sides of the road radiate the light to the road surface in front of the car in a direction opposite to the driving direction and the light is regularly reflected, if the light energy loss during transmission in the air is not calculated,

the vertical reflection component is expressed as follows:

$$E_{r \cdot v} = E_r \bullet \cos \alpha$$

the horizontal reflection component is expressed as follows:

$$E_{r \cdot t} = E_r \bullet \sin(\alpha + \varphi) \bullet \sin \theta$$

the illuminance component of the light source along the ocular axis direction of the driver is the retinal illuminance component, which may be expressed as follows:

$$E_{r \cdot e} = E_r \bullet \sin(\alpha + \varphi) \bullet \cos \theta$$

where, $E_{r \cdot e}$ is a valid radiation component, $E_{r \cdot v}$ and $E_{r \cdot t}$ are invalid components, $E_r$ is a reflecting illuminance vector of the light source reflected by the road surface, $\alpha$ is an incident angle of the light source, i.e. an angle between the normal line of the road surface and the light projecting direction, $\varphi$ is an angle between the driver sight line direction and the road surface, and $\theta$ is an angle between a plane in which the projected rays of light are located and a plane in which the driver sight lines are located.

In the road lighting model, $\varphi$=1°, the above three components can be compared as follows.

When $\theta < 45°$ and $\alpha \rightarrow 0°$,

$$E_{r \cdot v} > E_{r \cdot e} > E_{r \cdot t}.$$

The above inequality indicates that, in the lighting type with high-position installed lamps, the value of the invalid illumination component $E_{r \cdot v}$ is the biggest and is bigger than the valid illumination component $E_{r \cdot v}$.

When $\theta < 45°$ and $\alpha \rightarrow 90°$,

$$E_{r \cdot e} > E_{r \cdot t} > E_{r \cdot v}.$$

The above inequality indicates that, in the lighting type with low-position installed lamps, the value of the valid illumination component $E_{r \cdot e}$ is the biggest among all illumination components.

When $\theta > 45°$ and $\alpha \to 0°$,

$$E_{r \cdot v} \, > \, E_{r \cdot t} \, > \, E_{r \cdot e}.$$

The above inequality indicates that, in the lateral lighting with low-position installed lamps, the valid illumination component $E_{r \cdot e}$ is the smallest, and the invalid illumination component is much bigger than the valid illumination component.

When $\theta > 45°$ and $\alpha \to 90°$,

$$E_{r \cdot t} \, > \, E_{r \cdot e} \, > \, E_{r \cdot v}.$$

The above inequality indicates that, in the lateral lighting with low-position installed lamp, the invalid illumination component $E_{rt}$ is the biggest and bigger than the valid illumination component $E_{r \cdot e}$.

When $\theta > 45°$ and $\alpha \to 0°$,

$$E_{r \cdot e} \, = \, E_{r \cdot e_{\max}}.$$

The above equation indicates that, if in the road lighting, the light source mounted at a low position radiates the road surface in a backward direction and the radiation direction is as in consistent with the ocular axis direction of the driver as possible, then the retinal illuminance $E_{r \cdot e}$ formed by the light reflected from the road surface can achieve a maximum value, and the invalid illumination component approaches to a minimum value in the lateral lighting type with low-position installed lamps, the invalid illumination component $E_{rt}$ is the biggest and bigger than the valid illumination component $E_{r \cdot e}$.

When $\theta \to 0°$, the light radiation direction is parallel to the lane. At this time, the light radiation amount $E_e$ on the sight line is the biggest.

When $\theta \to 90°$, the light radiation direction is perpendicular to the lane. At this time, $E_e \to 0$, which indicates the lighting efficiency is extremely low.

If the light is regularly reflected, in the backward lighting type, the horizontal radiation component and vertical radiation component are the invalid illumination components, the backward radiation component is the valid illumination component. In the backward radiation component, the energy performance of the high level radiation is much lower than the energy performance of the low level radiation.

Among all the lighting types, backward lighting type with low-position installed lamps has the highest road surface lighting efficiency.

In real situations, the reflection of the light on the road surface is irregular reflection, which is a combination of regular reflection and diffuse reflection according to Lambert law.

(2) Experimental Analysis: road lighting efficiency experiments based on road surface luminance

The experiments are conducted in a dark room. A medium to be tested is used to simulate the road surface, which has a size of 1*1 m$^2$. The reflection is of a type having 80% of specular reflection plus 20% of diffuse reflection. A 4W LED light source is disposed on a rack and its direction is adjustable with rail and roller structures. The light source is spaced 2 meters from the medium to be tested and its angle ranges between 0° to 80°. In the experiments, the medium surface luminance is observed by a camera and an imaging luminance meter. The camera is placed at a height of 0.8 meter and at 4 meters in front of and behind the medium to be tested, which correspond to the forward lighting observation point and backward lighting observation point, respectively, to capture and measure the luminance of the medium to be tested.

The experiment simulates the four lighting types according to the table below (referring to Fig. 12 and Fig. 13).

| | | |
|---|---|---|
| Forward Lighting Observation Point | Forward High-position | $i \to 0°$ |
| | Forward Low-position | $i \to 80°$ |
| Backward Lighting | Backward High-position | $i \to 0°$ |
| Observation Point | Backward Low-position | $i \to 80°$ |

The experiment shows that the backward lighting type with low-position installed lamp (Backward Lighting Observation Point, incident angle is 80°) results in the highest road surface luminance, which is consistent with the deduction result.

The above analysis indicates that, among all the lighting types, the backward lighting type with low-position installed lamps has the highest road surface lighting efficiency. When the light source illuminates the road surface in front of the car with a light projection angle approximately parallel to the road surface (low level, lower than the driver sight line) and a radiation direction opposite to the driving direction (backward lighting), it can not only achieve a higher road surface reflecting luminance and higher uniformity of luminance, but it can also minimize the glare. In the present invention, the function of the backward lighting subsystem with low-position installed lamps is to provide the necessary road surface luminance, higher uniformity of luminance and minimize the glare.

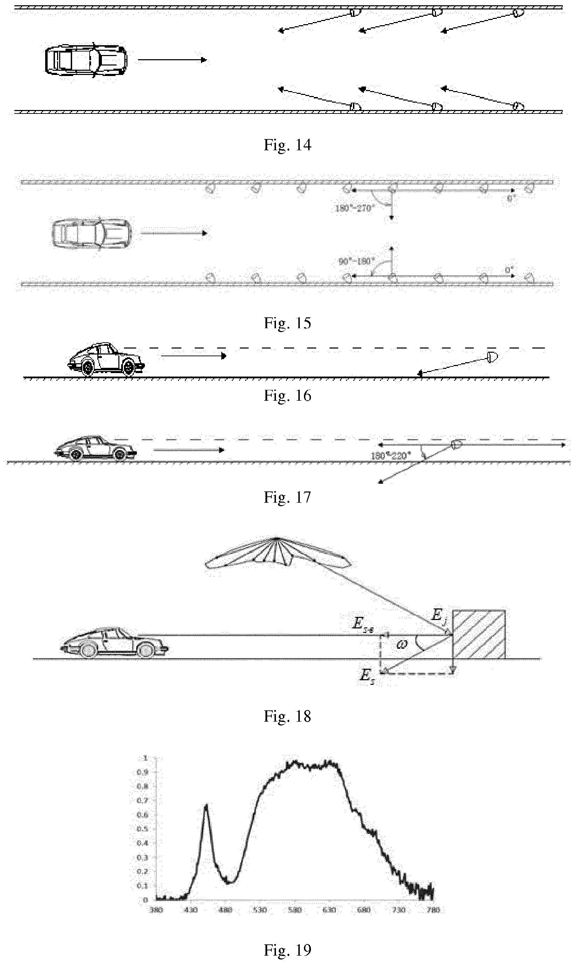

Regarding the light source for the backward lighting with low-position installed lamps, its radiation direction is opposite to the driving direction, and its radiation space includes a space below the height of lamp and the road surface (Fig. 14). For highway, municipal road and tunnel lighting, a horizontal radiation range of the backward lighting with low-position installed lamps is 90° to 180° and 180° to 270° (Fig. 15). To control the glare, the light source height of the backward lighting with low-position installed lamps is lower than the eye level of drivers, and the backward lighting with low-position installed lamps is required to have a light distribution without upward scattering (Fig. 16). For highway, municipal road and tunnel lighting, a vertical radiation range of the backward lighting with low-position installed lamps is 180° to 270° (Fig. 17).

In the multi-dimensional road lighting system of the present invention, the backward lighting subsystem with low-position installed lamps may operate in a variety of energy-saving light adjustment operating modes.

2. Space lighting for the purpose of increasing the visibility of the object - forward lighting subsystem

It is the basic lighting requirement to provide the space lighting of the road ahead so that the driver can effectively identify the obstacles ahead. The function of the forward lighting subsystem is to use a light source with a high color rendering index and a large color difference with respect to the background light source to provide the driver with good space lighting of the road ahead. The following theory deduction and experiments indicate that, among all lighting types, the forward lighting type has the highest space lighting efficiency. This conclusion is the basis of providing the present multi-dimensional road lighting system with the forward lighting subsystem.

(1) Theory deduction: retinal illuminance in the forward lighting

$E_j$ is the incident angle, $E_s$ is the reflection angle, $E_{s\cdot e}$ is the driver retinal illuminance, $\omega$ is an angle between $E_{s\cdot e}$ and $E_s$ (referring to Fig. 18).

Under the regular reflection condition, $E_s=E_j$. According to the cosine law, when a lamp illuminates an object ahead, the retinal illuminance component of the reflection vector is: $E_{s\cdot e} = E_s\cdot\cos\omega$. If $\omega\rightarrow90°$, then $E_{s\cdot e}\rightarrow0$.

The above expressions indicate that, in order to identify the obstacles ahead, the driver sight line is substantially parallel to the road surface, and the vertical illuminance is the main illuminance component required to observe the obstacles.

The above analysis indicates that when the light source illuminates the space in front of the car from a height slightly higher or lower than the eye level of drivers with a light projecting angle approximately parallel to the road surface and a radiation direction the same as the driving direction (forward lighting), a higher reflection luminance of the obstacles can be achieved in the driver sight line direction.

(2) Experimental analysis: space lighting efficiency experiment based on the visibility.

In the experiments, the visibility evaluation method must be able to independently adjust the color of the object and the background, independently calculate their color parameters and easily calculate the visibility.

Using "visual acuity chart" is advantageous in accurately expressing visual acuity and its change amplitude, and comparing and calculating statistics of the visual acuity testing results. The visibility evaluation method based on the "E" standard logarithmic visual acuity chart is used to evaluate the effects of various factors on the visibility in the lab environment.

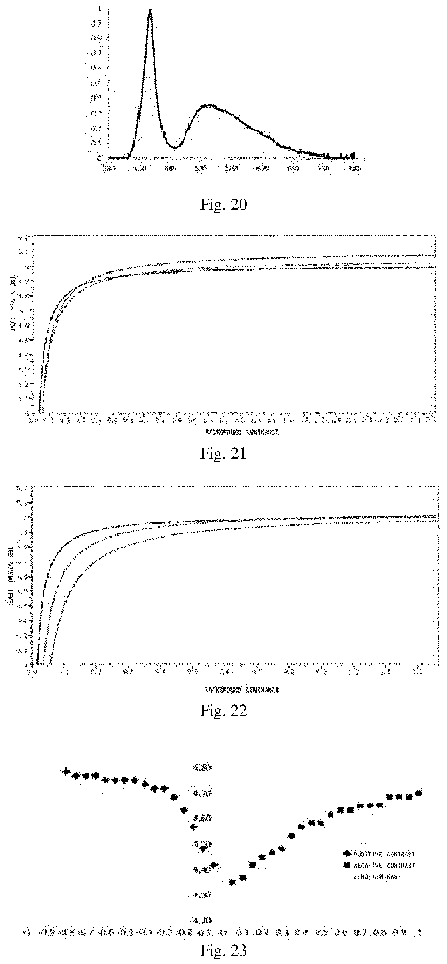

The experiment is conducted in a dark room. The experiment equipment include three parts: an "E" visual acuity chart box, an "E" lamp box and a background lamp box, the letter "E" and the background being independently adjustable. In order to increase the measurement accuracy, the increment rate of each line of the standard logarithmic visual acuity chart changes from $^{10}\sqrt{10}$ to $^{20}\sqrt{10}$ . Two yellow and two white LED light sources are used in the experiments, each having a power of 15 Watt. The chromaticity coordinates of the yellow LED is that x=0.4293 and y=0.4200, with a color temperature of 3258K and a color rendering index of 80 (referring to Fig. 19). The chromaticity coordinates of the white LED is that x=0.2872 and y=0.2855, with a color temperature of 9430K and a color rendering index of 74 (referring to Fig. 20).

(3) Effect of luminance and contrast on the space lighting efficiency

The experiments compare the effects of different object luminance and background luminance on the visual acuity and the effects of positive and negative contrast on the visual acuity under the same luminance difference $\Delta L$ between the object and the background. The experiments show that, no matter what the grey level of the background is, the regression curve gradually becomes gentle as the background luminance increases from zero. The visual acuity increases significantly at the start, but its increase rate gradually decreases with the increasing of the background luminance and finally approaches zero, with the visibility concentrated within the range of 4.6 to 5.2. For the same luminance difference $\Delta L$ between the object and the background, the visual acuity in the case of positive contrast is apparently lower than the visual acuity in the case of negative contrast (Fig. 21 and Fig. 22).

(4) Effect of chromaticity and contrast on the space lighting efficiency

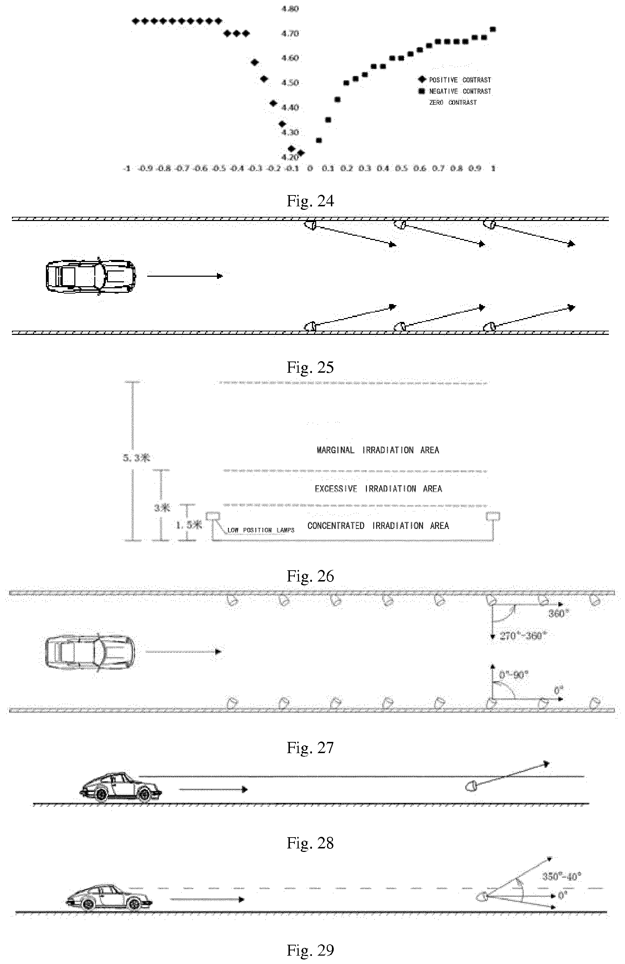

The experiments analyse the effect of color difference on the visibility under the same background luminance. The background luminance is set as $2cd/m^2$ in the experiments. Fig. 23 and Fig. 24 are scatter diagrams of luminance contrast and visual acuity average values between two experiment groups and a comparison group. When the luminance contrast increases to a certain level, the effect of color difference on the visibility becomes very little.

It can be concluded from the above that the road space lighting efficiency is subject to various factors. First, if the luminance is the same, the visibility in the case of positive contrast is apparently lower than the visibility in the case of negative contrast; after the luminance reaches to a certain level, the visibility no longer increases with the increase of the luminance. Second, although the effect of color contrast is less than the effect of luminance contrast on visibility, the color difference can increase the visibility at contrast values around zero, and the effect of color difference becomes less as the luminance increases. Third, the highest space lighting efficiency can be achieved when a light source with a low color temperature is used for the road lighting, a light source with a high color temperature is used for the object illumination, and a negative contrast is formed between the road surface and the object.

In the present invention, the requirements for the forward lighting subsystem include providing the necessary space illuminance of the road ahead, high uniformity of luminance and controlling the glare to a small value. In the forward lighting subsystem, the light source radiation direction is the same as the driving direction, and the height of the light source is approximately at the eye level of the driver (Fig. 25), which forms a top-dark-and-bottom-bright vertical illuminance gradient to ensure desired luminance of the near-ground space (Fig. 26). When the forward lighting subsystem is used in combination with the backward lighting subsystem with low-position installed lamps, the visibility of the obstacles ahead is increased by enhancing the luminance contrast and color contrast between the road surface background and the obstacles ahead. The light source in the forward lighting has a higher color temperature and a higher color rendering index than in the backward lighting subsystem.

For highway, municipal road and tunnel lighting, a horizontal radiation range of the forward lighting subsystem is 0° to 90° and 270° to 360° (referring to Fig. 27). The forward lighting subsystem of the present invention has an illumination space mainly above the height of lamp position (Fig. 28), with a vertical radiation range of 350° to 40° (referring to Fig. 29).

In the multi-dimensional road lighting system of the present invention, the forward lighting subsystem may operate in a variety of energy-saving light adjustment operating modes.

3. Lighting under haze condition for the purpose of overcoming "white fog effect"- lateral lighting subsystem

Under rain, fog, haze and smoke weather conditions, the reason for the significantly reduced efficiency of the car high beam is that a great amount of aerosol molecule clusters are suspended in the air in front of the car. As a result, the light to be incident on the object in front of the car is absorbed and scattered by the water molecule clusters on the light path before the light reaches the object. The scattered light forms a white fog screen, which is referred to as "white fog effect", thus making the driver unable to see the obstacles ahead clearly. On the other hand, the light reflected from the object in front of the car is absorbed and scattered by the aerosol molecule clusters suspended in the air, which reduces the luminance and contrast of the reflected light, thus greatly reducing the visibility of the obstacles in front of the car. The lighting condition in the middle section of a long tunnel is similar to the situation as described herein.

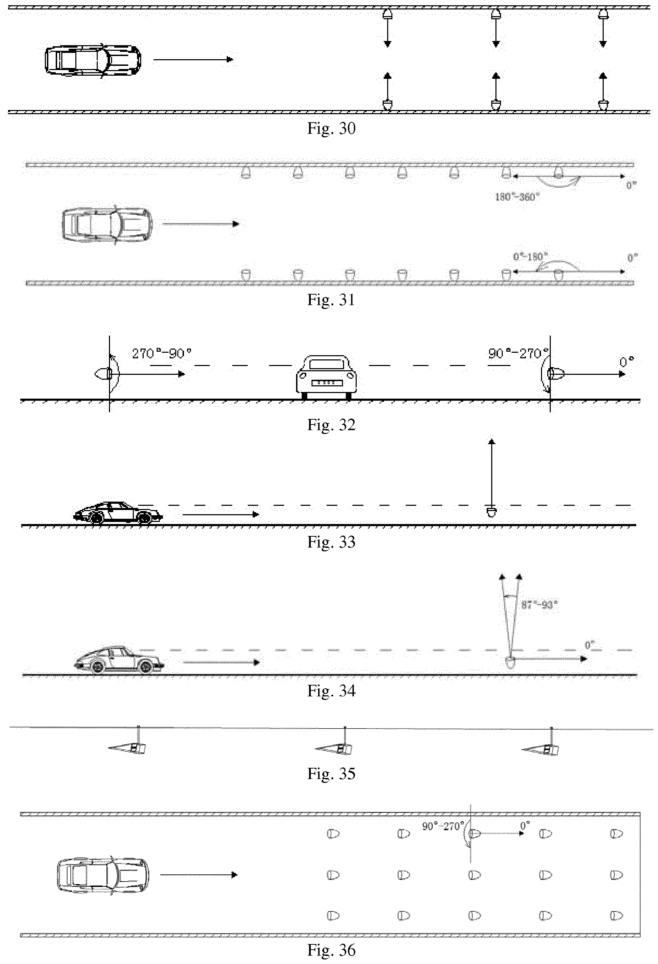

The basis of providing the lateral lighting light source is that studies show that, when the incident light is approximately perpendicular to the sight line of the driver, the "white fog effect" can be effectively overcome, which is currently an effective way of addressing the road lighting problem under the fog condition. In the present invention, the function of the lateral lighting subsystem is to provide the space lighting in which the light radiation direction is approximately perpendicular to the driver sight direction to increase the visibility of the obstacles ahead under the complicated weather conditions. A current study shows that, whether the HID light source or the LED light source, the penetration capability of the low color temperature light source is higher than that of the high color temperature light source. Therefore, the lateral lighting subsystem uses a light source with a color temperature lower than 5000K. The radiation direction of the light source is perpendicular to the driving direction and parallel to the road surface (Fig. 30), and the illumination space includes the space above or below the light height position and the road surface. For highway, municipal road and tunnel lighting, a horizontal radiation range of the lateral lighting subsystem is 0° to 180° and 180° to 360° (referring to Fig. 31), and a vertical radiation range is 90° to 270° and 270° to 90° (referring to Fig. 32).

In the multi-dimensional lighting system of the present invention, the light source power of the lateral lighting is not higher than 10W. For highways and municipal roads, the lateral lighting subsystem operates in the mode that the lateral lighting subsystem is closed under normal weather conditions and only activated under rain, fog, smoke and haze weather conditions or heavy exhaust gas pollutions. For tunnel lighting, the lateral lighting subsystem is only activated in the middle section of the tunnel.

In the multi-dimensional road lighting system of the present invention, the lateral lighting subsystem may operate in a variety of energy-saving light adjustment operating modes.

4. Indicator lighting for indicating an accident spot - vertical lighting subsystem

For highways and municipal roads, a necessary vertical lighting subsystem is provided to indicate the position, which facilitates rescue, especially air rescue.

The basis for providing the vertical lighting light source is that, when a position indication is needed in case of a road surface accident, a beam of vertical light with high penetration capability may form a local placemark at a light projecting spot on the road. In the present invention, the function of the vertical lighting subsystem is to provide indicator lighting which specifically indicates an accident position in the air when a rescue is needed in case of an accident. For the light source and lamp in the vertical lighting, its radiation direction is perpendicular to the road surface (Fig. 33), its mounting interval is no greater than 2Km, its power is no higher than 10W, and it has a symmetrical distribution curve flux, with a radiation range of 87° to 93° (Fig. 34). Its radiation space is above the road and does not interference with other lighting components. Its light source has a single color or multiple colors alternating with each other. The vertical lighting subsystem is normally deactivated and can be manually activated under special circumstances.

5. Tunnel wall surface lighting for the purpose of addressing the "black hole/white hole" effect -backward lighting subsystem with high-position installed lamps

There are three special visual effects in the tunnel lighting, i.e. the "black hole" effect and "white hole" effect at opposite ends of the tunnel, and the "white fog" effect in the middle range of the tunnel.

In the present invention, the special visual effects in the tunnel lighting are addressed as follows: in the tunnel threshold range, the luminance of the tunnel wall is set to be close to the luminance outside the tunnel to address the "black hole/white hole" effect; in the tunnel transition range, the luminance of the tunnel wall, especially the top wall, is set to have a gradual change from the threshold range to the middle range to improve the "adaptation to luminosity" effect; in the middle range, the incident angle of the light source is set to be approximately perpendicular to the driver sight line to address the "white fog" effect.

The function of the tunnel wall lighting is to address the special visual effects in the tunnel lighting, i.e. the "black hole" and "white hole" effects. In the tunnel threshold range, the measure taken is to set the luminance of the tunnel wall to be close to the luminance outside the tunnel. It can be easily deduced that the tunnel wall lighting follows the conclusion that is made with respect to the backward lighting, i.e. the backward lighting type with high-position installed lamps has the highest wall lighting efficiency among all lighting types.

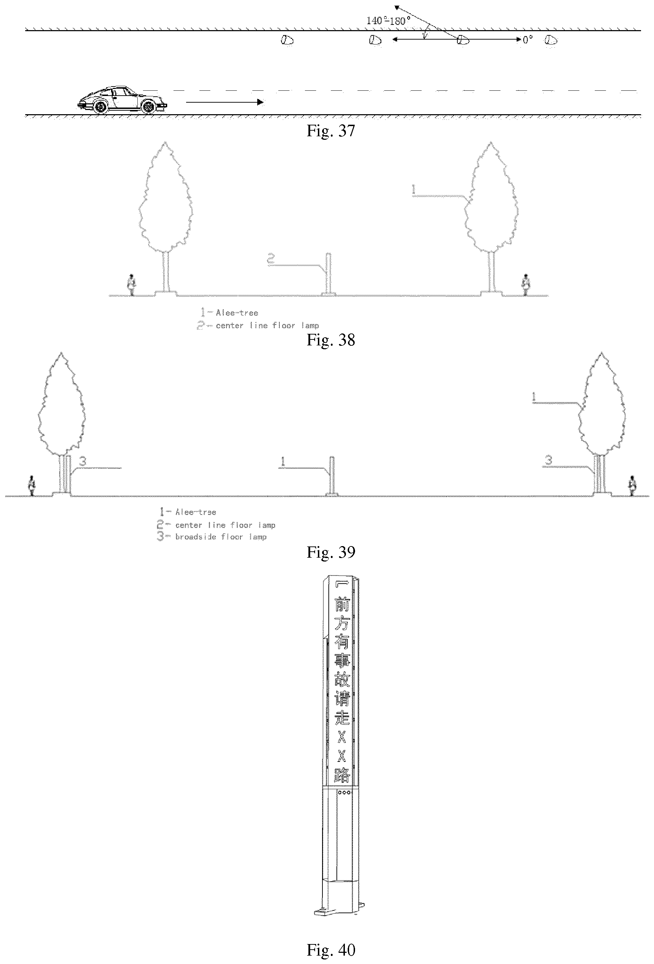

The basic principle of the backward lighting type with high-position installed lamps is that: in the inside of the tunnel, when the light source illuminates the wall surface ahead in a radiation direction the same as the driving direction and with a light projecting angle such that the radiation direction is approximately perpendicular to a normal line of the wall surface, a higher wall reflective luminance and a higher uniformity of luminance can be achieved along the driver sight line and the glare can be controlled to a smaller value. In the present invention, the requirements for the backward lighting subsystem with high-position installed lamps include that the wall luminance is provided in a backward lighting manner with high-position installed lamps, which has a gradual change between the threshold range and the tunnel inside range to improve the "adaptation to luminosity" effect. The illumination space of the backward lighting subsystem with high-position installed lamps includes the space and wall above the height of lamp, its light distribution has no downward scattering (Fig. 35), its horizontal radiation range is 90° to 270°, and its vertical radiation range is 140° to 180° (Fig. 37).

6. Surround lighting for the purpose of increasing the surround ratio of the municipal road - side lighting subsystem

Municipal road lighting requires a desired surround ratio in addition to the lighting of the road itself, such that the driver is able to recognize any possible movable object beside the road during driving. When the multi-dimensional road lighting system of the present invention is used in municipal roads, lamps are arranged in a manner of "road center line single row lamp distribution" (Fig. 38), and, for wider road sections, the lamps are arranged in a manner of "road center line lamp distribution plus side lamp distribution" (Fig. 39). No matter which lamp distribution manner is used, it includes the backward lighting subsystem, forward lighting subsystem, lateral lighting subsystem, side lighting subsystem and various subsystems described below at the same time.

7. Display lighting for the purpose of providing real-time traffic information - display lighting subsystem

In the present invention, the basic principle of the display lighting is that: in digital cities, smart traffic direction systems need to timely provide traffic information to drivers and issue directions of traffic direction department to the drivers through audio signals or video signals. In the present invention, the function of the display lighting subsystem is to deliver real-time video signals and display picture and text information to guide cars to pass orderly. The light source and lamps used in the display lighting are LED/OLED displays or dot matrixes, which have a radiation direction oblique to the driving direction. The display lighting subsystem is activated and controlled by the traffic direction department (Fig. 40).

8. Surround lighting for the purpose of city landscape construction - landscape lighting subsystem

In the present invention, the function of the landscape lighting subsystem is to provide landscape lighting which constitutes a night landscape element in the city and creates a festival atmosphere, while not affecting driving safety.
In the present invention, the landscape lighting subsystem is mainly used in municipal roads or bridges in combination with the above described functional lighting subsystems to form an integrated lamp. The landscape lighting subsystem operates independently and is controlled separately by a city management department or controlled by the traffic direction department.

9. Comprehensive measures for the purpose of eliminating glare - cut-off plate subsystem

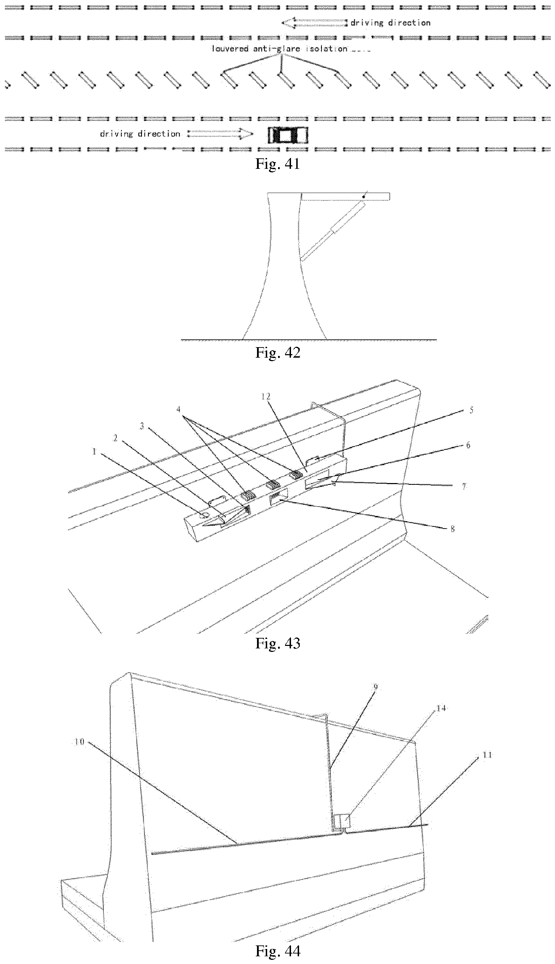

The objective of the multi-dimensional road lighting system is to completely eliminate the road lamp glare. The road lamp glare includes the glare when the driver looks ahead (front-view glare), the glare from the rear-view mirror (rear-view glare) and the glare to the residence near the street (residence glare).
Studies show that the source of the front-view glare includes: 1) the light source of the backward lighting with low(high)-position installed lamps for a lane that causes glare to the driver in the same lane, and 2) the light sources of the forward lighting and lateral lighting for a lane that cause glare to the driver in an opposite lane; the source of the rear-view glare includes the light sources of the forward lighting and lateral lighting for a lane that cause glare to the driver in the same lane.
It is discovered that the necessary condition for eliminating the front-view glare is to dispose the luminous surface and the road surface at the same side of the driver, i.e. the road lamp is disposed between the driver and the road surface, and a cut-off plate is disposed; the necessary condition for eliminating the rear-view glare is to reduce the luminance of the unit luminous surface; the necessary condition for eliminating the residence glare is to arrange a cut-off plate to cut off the direct light path between the road lamp and the residence nearby.
In the present invention, the cut-off plate subsystem is arranged in the multi-dimensional lighting system as comprehensive measures to eliminate the glare. There are two types of measures including top and/or bottom cut-off plates disposed on the lamp for the highway, municipal road and tunnel lighting and shutter-style anti-glare grids added to the median strips of the highways (Fig. 41). When the light source is disposed below the eye level of drivers and projects the light downward (backward lighting subsystem with low-position installed lamps), the top cut-off measure is taken; when the light source is disposed above the eye level of drivers and projects the light upward (backward lighting subsystem with high-position installed lamps), the bottom cut-off measure is taken; these cut-off measures cause the driver ocular axis direction to be located outside the light distribution scope of the lamps, thus avoiding direct exposure of the light source within the visual field in front of the driver.

10. Integrated facility for the purpose of utilizing solar energy - photovoltaic subsystem

The current road lighting is concentrated lighting with a single-HID-lamp's power of 250W, a single-LED-lamp's power of 150W, and a lamp mounting spacing of 30m to 40m. When the current photovoltaic technology is used in the concentrated lighting condition, it is unreliable if the solar energy is used as the sole power supply. In fact, to increase reliability, the current photovoltaic integrated lighting for the highways and municipal roads all use a dual power supply, which greatly increases the investment and operational cost. This is also one of the most important reasons why the road photovoltaic integrated lighting fails to be popularized.

One important feature of the multi-dimensional road lighting system of the present invention is reducing the single-lamp's power to 2-3W and reducing the lamp mounting spacing to 2 to 8 meters. In comparison with the current road lighting, the present multi-dimensional road lighting system is featured by a distributed and small scale lighting. The single-lamp power of the multi-dimensional road lighting system is only 1% to 2% of the single-lamp's power of the concentrated lighting, which greatly reduces the single-lamp photovoltaic cell size and storage parts as well as the effect of single-lamp failure. Therefore, this can increase the power supply reliability, thus enabling an integrated road lamp which uses the solar energy as the sole power supply (Fig. 42).

In summary, the above ten key subsystems form the new road lighting system of the present invention - multi-dimensional road lighting system. The multi-dimensional road lighting system includes a multi-dimensional lighting type and a lamp dedicated for use in highway, municipal road and tunnel lighting. The multi-dimensional road lighting system includes multiple dimensions of lighting subsystems including at least one dimension of backward lighting subsystem, one dimension of forward lighting subsystem and one dimension of lateral lighting subsystem, with each dimension of lighting subsystem formed by a physical light source. The light projecting direction of the backward lighting subsystem is opposite to the driving direction, the light projecting direction of the forward lighting subsystem is the same as the driving direction, and the light projecting direction of the lateral lighting subsystem is perpendicular to the driving direction.

The backward lighting subsystem includes a backward lighting subsystem with low-position installed lamps and a backward lighting subsystem with high-position installed lamps. The height of lamp of the backward lighting subsystem with low-position installed lamps is lower than the eye level of the driver, a horizontal radiation range is 90° to 180°, 180° to 270°, and a vertical radiation range is 180° to 270°. The radiation space is below the light source position without upward scattering. The height of lamp of the backward lighting subsystem with high-position installed lamps is higher than the eye level of the driver, a horizontal radiation range is 90° to 270°, and a vertical radiation range is 140° to 180°. The radiation space is above the light source position without downward scattering. When the lighting system is used in the highway and municipal road lighting, the backward lighting subsystem is the backward lighting subsystem with low-position installed lamps. When the lighting system is used in tunnel lighting, the backward lighting subsystem includes the backward lighting subsystem with low-position installed lamps and backward lighting subsystem with high-position installed lamps.

The horizontal radiation range of the forward lighting subsystem is 0° to 90°, 270° to 360°, the vertical radiation range is 350° to 40°, and the radiation space is mainly above the height of lamp. The horizontal radiation range of the lateral lighting subsystem is 0° to 180°, 180° to 360°, and the radiation space includes the space above and below the height of lamp and the road surface.

When the lighting system is used in highways and municipal roads, the lighting system further includes a dimension of vertical lighting subsystem. The light projecting direction of the vertical lighting subsystem is perpendicular to the road surface, the radiation range is 87° to 93°, and the radiation space is above the road.

The multiple dimensions of lighting subsystems are divided into multiple groups, with each group of the lighting subsystems separately disposed or integrated together. Operation modes of the lighting subsystems include a normal mode and an abnormal mode. The normal mode includes a general mode and an energy-saving mode. The abnormal mode includes an urgent mode and an indication mode. In the normal mode, when the lighting system is used in the tunnel lighting, the general mode is that the backward lighting subsystem, forward lighting subsystem and the lateral lighting subsystem operate in full power within a normal light-on period. When the lighting system is used in highway and municipal road lighting, the general mode is that the backward lighting subsystem and forward lighting subsystem operate in full power within a normal light-on period. In the energy-saving mode, a light adjustment is performed on the basis of the general mode. In the abnormal mode, when the lighting system is used in highway and municipal road lighting, the urgent mode is that the lateral lighting subsystem is activated under haze weather conditions or in urgent situations and the indication mode is that the vertical lighting subsystem is activated when an indication is needed.

A lamp of the multi-dimensional road lighting system includes a lamp body, a device body, and a pipeline. The lamp body includes a light source and a fixing device. The device body includes a power supply circuit, a driving circuit or a photovoltaic system, a control circuit and a fixing device. The pipeline includes a conductive wire and a protective tube. The lamp is used in the multi-dimensional road lighting system for highway, municipal road and tunnel lighting. The light source at least includes a backward lighting light source, a forward lighting light source and a lateral lighting light source. The light projecting direction of the backward lighting light source is opposite to the driving direction, the light projecting direction of the forward lighting light source is the same as the driving direction, and the light projecting direction of the lateral lighting light source is perpendicular to the driving direction.

The lamp of the multi-dimensional road lighting system is described below in detail in junction with different applications including highway, municipal road and tunnel lighting.

Fig. 43 to Fig. 46 illustrates a lamp used in highways according to an embodiment of the present invention. The backward lighting light source is mounted at a height less than 1.5m and at interval mounting spacing greater than 10m. The lamp body of the lamp includes a lamp housing 12, a vertical lighting light source 1, a backward lighting light source 3, a forward lighting light source 6, and a lateral lighting light source 8.

The lamp housing 12 is a laterally disposed rectangular hollow housing which acts as the fixing device of the lamp body. The cross-section of the lamp housing 12 may be circular, oval, triangular or polygonal in shape. The lamp housing 12 has a waterproof level no less than IP 65. A rear side of the lamp housing 12 extends outward to form a screw-hole plate 5. The lamp housing 12 is mounted to a road fence or anti-collision wall. The lamp housing 12 has an access opening at a top side thereof. A cover for the access opening is provided with a plurality of heat sink fins 4. The lamp housing 12 may be made of engineering plastics, aluminium or steel. A circuit is disposed in the lamp housing 12. A reflective film may be attached to a front side of the lamp housing 12 to increase the driving safety in case of a sudden power outage. A sign of road section code may be attached to the lamp housing 12, thus allowing for the providing of an accurate position of an accident to reduce rescue time.

The vertical lighting light source 1 is disposed on the top side of the lamp housing 12. The backward lighting light source 3, forward lighting light source 6 and lateral lighting light source 8 are disposed on the front side of the lamp housing 12. The backward lighting light source 3 and the forward lighting light source 6 are symmetrically disposed on left and right sides of the lateral lighting light source 8 and have opposite radiation directions. A top cut-off plate 2 is disposed at a top side of the backward lighting light source 3 to cut off the upward light such that the backward lighting light source 3 has no upward scattering. The top cut-off plate 2 is reinforced by reinforcement ribs. A bottom cut-off plate 7 is disposed at a bottom side of the forward lighting light source 6 to cut off the downward light such that the forward lighting light source 6 has no downward scattering. The bottom cut-off plate 7 is reinforced by reinforcement ribs.

As shown in Fig. 44, the pipeline of the lamp includes a wire tube 9 and an electric wire installed in the wire tube 9. The lamp housing 12 is connected with the wire tube 9. The electric wire installed in the wire tube 9 is electrically connected with the circuit in the lamp housing 12. The wire tube 9 is connected to a waterproof junction box 14. The wire tubes 9, 10, 11 of multiple lamps are connected through the waterproof junction box 14. The waterproof junction box 14 and wire tubes 9, 10, 11 are preferably attached to outsides of low walls on opposite sides of the road, such that main electric lines can be prevented from being damaged in general traffic accidents. It should be understood that part of the lines may be connected via waterproof male-female connectors.

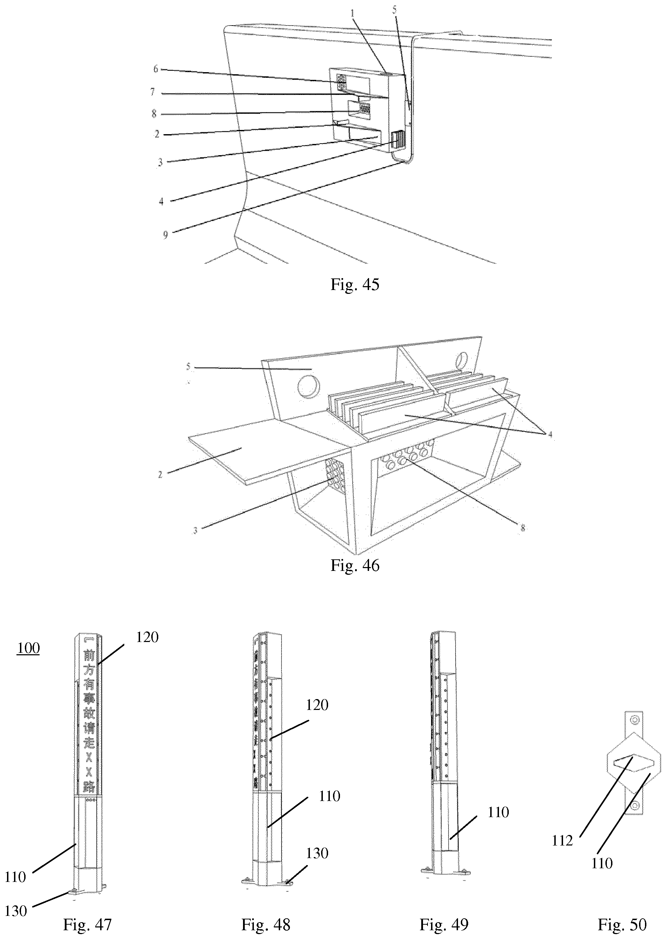

In an embodiment of Fig. 45, the backward lighting light source 3 and the forward lighting light source 6 are symmetrically disposed at top and bottom sides of the lateral lighting light source 8. The access opening is formed in one side of the lamp housing 12. Other features of the light of this embodiment are the same as in the embodiment of Fig. 43 and therefore further explanation thereof is not repeated.

In an embodiment of Fig. 46, the backward lighting light source 3, the forward lighting light source 6, and the lateral lighting light source 8 are disposed on left, right and front sides of the lamp housing 12, respectively, and the vertical lighting light source 1 is omitted. Other features of the light of this embodiment are the same as in the embodiment of Fig. 43 and therefore further explanation thereof is not repeated.

Fig. 47 to Fig. 57 illustrate a lamp used in municipal roads according to one embodiment of the present invention. The lamp 100 includes a hollow lamp body 110, a light source 120, a fixing device 130 and a pipeline (not show). The light source 120 and pipeline are disposed within the lamp body 110. The fixing device 130 is disposed on the lamp body 110 for fixing the lamp body 110 on the ground. The light source 120 is mounted at a height not greater than 4m.

The lamp body 110 may be made of engineering plastics, aluminium or steel. The cross-section of the lamp body 110 may be circular, oval, triangular or polygonal in shape. The lamp body 110 has a waterproof level of no less than IP 65. The lamp body 110 is connected to another lamp body via an electric cable. The lamp body 110 is mounted at a height between 1.5m to 5m and at an interval between 2m to 12m. In addition, the lamp body 110 may have a waterproof access opening for allowing inspection and maintenance of components in the lamp body 110. Referring to Fig. 50, the lamp body 110 may form a ventilation chamber 112 in an interior of the lamp body 110. The ventilation chamber 112 allows the heat of the light source 120 installed in the lamp body 110 to be dissipated via a thermal ventilation manner, thereby ensuring normal stable operation of the light source 120. In addition, a reflective film may be attached to a front side of the lamp body 110 to increase the driving safety in case of a sudden power outage.

The fixing device 130 may be screws or brackets disposed on the lamp body 110, which can fix the lamp body 110 to a center line of the road and road surfaces/low walls at road sides.

The light source 120 includes a backward lighting light source with low-position installed lamp, a forward lighting light source with middle-position installed lamp, a lateral lighting light source with middle-position installed lamp, a vertical lighting light source and an information display apparatus and landscape lighting light source. These light sources for different purposes operate independently. The radiation space of the backward lighting light source with low-position installed lamp includes the space below the height of lamp and the road surface. In addition, a top cut-off plate may be disposed above the backward lighting light source with low-position installed lamp, such that the backward lighting light source with low-position installed lamp has no upward scattering.

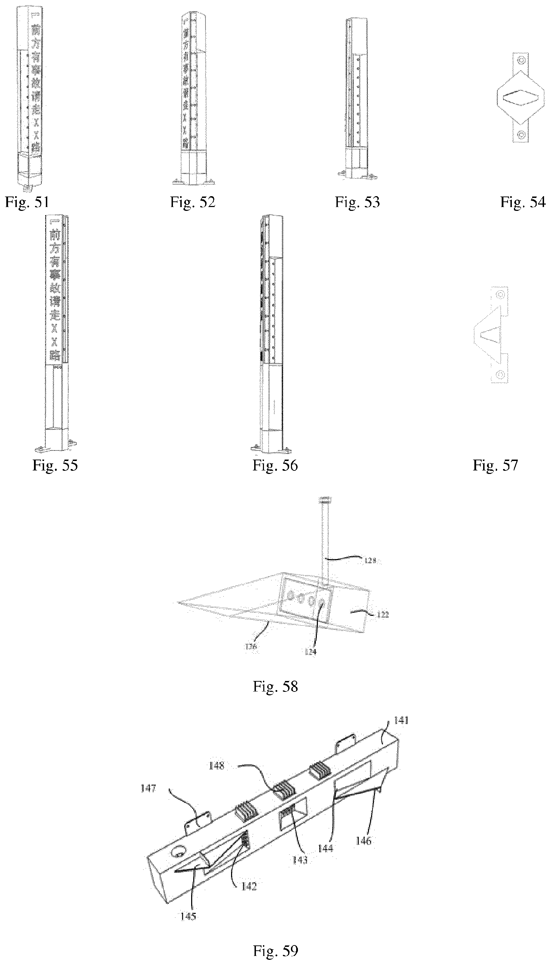

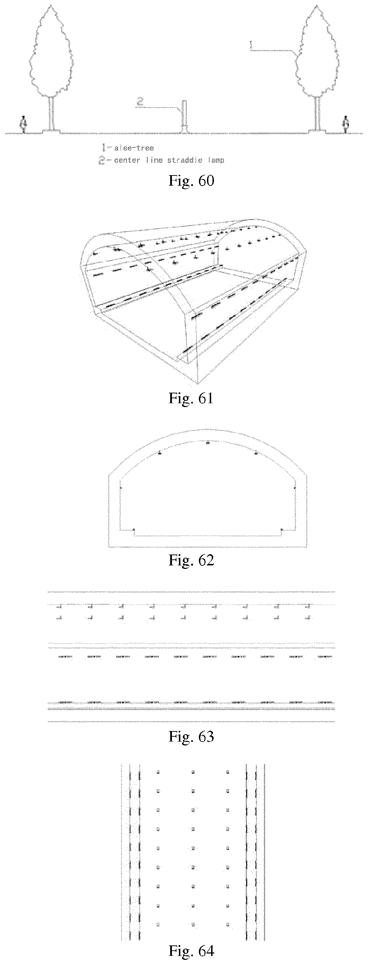

When the above lamp 100 is used in narrow road sections, the lamps may be arranged in a manner of "road center line single row lamp distribution" as shown in Fig. 38. For wider road sections, the above described lamps 100 and side-type floor-standing lamps as shown in Fig. 55 to Fig. 57 may be arranged in a manner of "road center line lamp distribution plus side lamp distribution" as shown in Fig. 39. For a road having a separation wall built along a center line thereof, as shown in Fig. 60, center-line straddle type lamps as shown in Fig. 51 to Fig. 54 may be used which are arranged on the separation wall. For non-horizontal road sections, because the viewing distance is shortened, the power density is increased when compared with the power density for horizontal road sections. For non-straight road sections, because the viewing distance is shortened, the power density is increased when compared with the power density for straight road sections. For special road sections such as intersections and pedestrian crossings, the power density is increased and the road horizontal luminance is creased. For road sections having intersecting flows of pedestrians and cars, the power density is increased and the vertical luminance is increased.

When the lamps of the present invention are used in highways and municipal roads, multiple groups of lamp bodies may be arranged according to needs, which are distributed along the lateral road sides. The mounting interval between two adjacent groups of lamp bodies is not greater than 10m. The lamps are mounted at a height not higher than 4m. The position of the backward lighting light source is lower than 1.5m, and a top cut-off plate is disposed above the backward lighting light source.

Fig. 35, Fig. 58 and Fig. 59 illustrates a luminaire for use in tunnels according to one embodiment of the present invention. The luminaire includes a high-position installed luminaire and a low-position installed luminaire. The mounting spacing between adjacent lamp bodies is not greater than 5m.

The high-position installed luminaire includes a hollow lamp body 122, a dimension of backward lighting light source 124 with high-position installed lamp mounted on the lamp body 122, a bottom cut-off plate 126, and a fixing device 128. The lamp body 122 may be made of engineering plastics, aluminum or steel. The cross-section of the lamp body 122 may be circular, oval, triangular or polygonal in shape. The lamp body 122 has a waterproof level of no less than IP 65. Electric cables between the lamp bodies 122 are connected via waterproof junction boxes or waterproof joints. The bottom cut-off plate 126 is disposed on the lamp body 122 below the backward lighting light source 124 with high-position installed lamp, such that backward lighting light source 124 with high-position installed lamp has no downward scattering. The fixing device 128 is disposed above the lamp body 122. The high-position installed lamp is mounted at a height higher than 1.5m. Multiple high-position installed luminaires may be spacedly fixed to the wall on lateral sides of the tunnel by the fixing devices 128 (Fig. 61 and Fig. 62).

Referring to Fig. 59, the low-position installed luminaire includes a lamp body 141, a dimension of backward lighting light source 142 with low-position installed lamp, a dimension of lateral lighting light source 143, a dimension of forward lighting light source 144 with low-position installed lamp, a top cut-off plate 145, a bottom cut-off plate 146, a fixing device 147, and heat dissipation devices 148. The lamp body 141 may be made of engineering plastics, aluminium or steel. The cross-section of the lamp body 141 may be circular, oval, triangular or polygonal in shape. The lamp body 141 has a waterproof level of no less than IP 65. Electric cables between the lamp bodies 141 are connected via waterproof junction boxes or waterproof joints. The backward lighting light source, the forward lighting light source, and the lateral lighting light source with low-position installed lamps are mounted at a height lower than 1.5m.

The lateral lighting light source 143 is disposed at a middle portion of the lamp body 141. The backward lighting light source 142 with low-position installed lamp and the forward lighting light source 144 with low-position installed lamp are disposed on the lamp body 141 and on opposite sides of the lateral lighting light source 143. The light projecting direction of the backward lighting light source 142 with low-position installed lamp is opposite to the driving direction. The top cut-off plate 145 is disposed on the lamp body 141 above the backward lighting light source 142 with low-position installed lamp, such that the backward lighting light source 142 with low-position installed lamp has no upward scattering. The light projecting direction of the forward lighting light source 144 with low-position installed lamp is the same as the driving direction, and the radiation space is above the height of lamp. The bottom cut-off plate 146 is disposed on the lamp body 141 below the forward lighting light source 144 with low-position installed lamp, such that the forward lighting light source 144 with low-position installed lamp has no upward scattering.

The heat dissipation devices 148 are disposed on the lamp body 141. The heat dissipation devices 148 correspond to the backward lighting light source 142 with low-position installed lamp, the lateral lighting light source 143, and the forward lighting light source 144 with low-position installed lamp, for dissipating the heat of the backward lighting light source 142 with low-position installed lamp, the lateral lighting light source 143, and the forward lighting light source 144 with low-position installed lamp, thus ensuring stable operation of the backward lighting light source 142 with low-position installed lamp, the lateral lighting light source 143, and the forward lighting light source 144 with low-position installed lamp.

The fixing device is disposed on the lamp body 141 for fixing the low-position installed luminaire. As shown in Fig. 61 to Fig. 64, the low-position installed luminaires are spacedly fixed to side stages or low walls at opposite sides of the tunnel by the fixing devices 147. The low-position installed luminaires are mounted at a height lower than 1.5m and at a mounting spacing not greater than 5m. The low-position installed luminaires may be placed on the side stages or fixed to the walls at opposite sides of the tunnel. In addition, a reflective film may be attached to a front side of the lamp body 122/141 to increase the driving safety in case of a sudden power outage.

In various embodiments above, the operation status of the backward lighting light source, forward lighting light source, lateral lighting light source, vertical lighting light source and display lighting light source may be controlled independently. There may be two control manners - control through power supply circuit: the power supply circuit for each of the light sources for different purposes is a separate loop circuit that operates independently, and the operation status of the light source is controlled by its corresponding power supply circuit; and control through control circuit: all the light sources are commonly supplied with power, and an additional control circuit /module is added to remotely control the operation status of the light sources.

When the luminaire is used in a highway, the device body and lamp body are combined into an integrated luminaire. Alternatively, the device body is separately fixed to an outside of the road fence or on the road fence and is connected to the lamp body or another device body through a pipeline. When the luminaire is used in a municipal road, the device body and lamp body are combined into an integrated luminaire which is connected to another luminaire through a pipeline. When the luminaire is used in a tunnel, the device body is fixed on or into a sidewall of the tunnel and is connected to the lamp body or another device body through a pipeline.

In various embodiments described above, the power of the backward lighting light source is not greater than 8W, the color temperature is not higher than 4000K, and the backward lighting light source has an asymmetric distribution curve flux. The power of the forward lighting light source is not greater than 8W, the color temperature is higher than 4000K, and the forward lighting light source has an asymmetric distribution curve flux, and the color rendering index is greater than 70. The power of the lateral lighting subsystem is not greater than 10W, and the color temperature is lower than 5000K.

When the above lamp is used in a municipal road, the lamp body further includes an apparatus and light source for information display and landscape lighting. The light sources for different purposes are commonly supplied with power and operate independently. When the luminaire is used in a highway or municipal road, the luminaire may be commonly supplied with a road lamp power supply, independently powered by their respective photovoltaic electricity generating systems or powered by a combination of the two types of power supply.

When the luminaire is used in a tunnel, the mounting spacing between adjacent lamp bodies is not greater than 5m. The backward lighting light source includes a backward lighting light source with low-position installed lamp and a backward lighting light source with high-position installed lamp. The backward lighting light source with low-position installed lamp is lower than 1.5m, and the backward lighting light source with high-position installed lamp is higher than 1.5m. The lamp body further includes a high-position lamp body and a low-position lamp body. The backward lighting light source with high-position installed lamp is mounted on the high-position lamp body. The lateral lighting light source, backward lighting light source with low-position installed lamp and forward lighting light source with low-position installed lamp are disposed on the low-position lamp body, and the backward lighting light source with low-position installed lamp and forward lighting light source with low-position installed lamp are on opposite sides of the lateral lighting light source. The high-position lamp body includes a bottom cut-off plate below the high-position lighting light source. The low-position lamp body includes a top cut-off plate above the low-position backward lighting light source.

Key features of the above multi-dimensional road lighting system include completely eliminating glare including the front-view glare, rear-view glare and residence glare. The measures taken to eliminate the front-view glare includes appropriate light distribution of the lamps, the provision of the top and/or bottom cut-off plates, and the shutter type anti-glare grid on the center median strip. The measure taken to eliminate the rear-view glare is reducing the luminance of the forward lighting light source. The measure taken to eliminate the residence glare is providing the lamp with the top cut-off plate.

The multi-dimensional road lighting system of the present invention has the following advantages.

1. Comparison with the current road lighting system

(1) High efficiency and energy-saving

There is a large space with valid illumination in the current road lighting system, and there is a large invalid illumination component even in the space with valid illumination, which leads to a low lighting efficiency of the current road lighting system. The essence is that the radiation space is too large, an unnecessary area is radiated, and the radiation direction is unreasonable. In the multi-dimensional road lighting system, the measures for increasing the lighting efficiency include that: firstly, the illumination area is significantly reduced, which avoids the high invalid illumination area; secondly, the radiation space and luminance distribution are reasonable, for the road surface lighting, the road surface lighting efficiency of the backward lighting subsystem with low-position installed lamp is much higher than that of the current concentrated lighting with high-position installed lamp, for the lighting of obstacles ahead, the space lighting efficiency of the forward lighting subsystem is much higher than that of the current concentrated lighting with high-position installed lamp, for the tunnel wall lighting, the lighting efficiency of the backward lighting subsystem with high-position installed lamp under haze conditions is much higher than the current tunnel lighting. Therefore, the power density is much lower than the current road lighting system.

(2) Elimination of glare

In the current road lighting system, the backward light projection component causes the direct glare from the top front space to the driver driving in his lane, the forward light projection component causes the direct glare from the top front space to the driver driving in the opposite lane, and inevitably causes light pollution to residence nearby.

This inventor sums up the conclusion that the road lamp glare includes the front-view glare, rear-view glare and residence glare, and his study indicates the necessary conditions for eliminating the road lamp glare. The multi-dimensional road lighting system of the present invention takes top cut-off measure, bottom cut-off measure and cut-off plate comprehensive measure to shield the glare to the driver and to the residence nearby, thus significantly reducing the glare index in comparison with the current road lighting system.

(3) Increasing visibility

Study shows that when the road surface lighting uses a low color temperature light source, the illumination of the object ahead uses a high color temperature light source, and a negative contrast is formed, the space lighting efficiency can be effectively increased.

Accordingly, the multi-dimensional road lighting system of the present invention separates the illumination spaces of the backward lighting component and the forward lighting component and light adjustment is performed independently to form a strong luminance contrast between the road surface background and the object ahead. The color contrast is enhanced by controlling the color of the backward illumination component and the forward lighting component. These two measures both increase the visibility of the object ahead in comparison with the current road lighting system.

(4) No heat dissipation issue

The heat dissipation issue of LED light source has been the bottleneck of the development of LED road lamp. The government has invested a large amount of capital and labor forces to study the LED road lamp for many years. One importance achievement of the multi-dimensional road lighting system of the present invention is realizing the distributed arrangement of the lamp positions and small scale of the lamps. A direct advantage of this achievement is that the heat dissipation issue of the LED light source in the concentrated illumination is addressed. In fact, the original LED light source is a small power light source. The heat dissipation issue arises when the small power light sources are integrated to replace the HID light source and is thus man-caused. The multi-dimensional road lighting system of the present invention includes a lamp body specifically designed for LED. No technology development or dedicated fees are needed for addressing the heat dissipation issue during manufacturing of the lamp body.

(5) Reducing cost and easy in maintenance

When compared with the traditional large power and concentrated road lighting, the multi-dimensional road lighting system of the present invention does not need dedicated steel lamp poles, and the lamp mounting height is lower. The lamps can be mounted to the road fence or anti-collision wall, which makes the on-site assembly simple. In addition, this facilitates the maintenance of the lamps, and the lamps can be replaced without closing the lane.

In the present invention, the lighting subsystems and control circuits are integrated into the lamp housing. The photovoltaic electricity generating system is disposed on the road fence or anti-collision wall, its assembly is simple and its removal is convenient. The light source of each lighting subsystem forms its own loop circuit that operates independently.

Therefore, the one-time invest as well as operational cost of the multi-dimensional lighting system of the present invention is significantly reduced when compared with the current road lighting system.

2. Comparison with the current lighting type with low-position installed lamp

In comparison with the low-position installed road lamp technology of China Patent No. 200720095548.4, the present invention is completely different in illumination principle, main function, radiation direction, radiation space and operation manner. The multi-dimensional road lighting system of the present invention is not limited to the lighting type with low-position installed lamp, but includes lighting systems with low-position, middle-position and high-position installed

**EP 2 896 875 B1**

lamps according to different applications. For example, the backward lighting subsystem with low-position installed lamp functions to provide the road surface lighting and is thus of low-position installed. However, the forward lighting subsystem functions to provide the space lighting of the road ahead to the driver and is not limited to the low-position installation. The backward lighting subsystem with high-position installed lamp is used in tunnel lighting and is of high-position installed.

As can be readily seen, the low-position installed road lamp technology of China Patent No. 200720095548.4 is similar to only one dimension of illumination component of the present invention - lateral lighting subsystem. However, the lateral lighting subsystem of the present invention does not provide the road lighting under normal weather conditions but is only used as an auxiliary lighting subsystem. The function of the lateral lighting subsystem is to increase the visibility under complicated weather conditions. Contrary to the lighting type of the low-position installed road lamp technology of China Patent No. 200720095548.4, the lateral lighting subsystem of the present invention is deactivated under normal weather conditions but is only activated under rain, fog, smoke and haze conditions. In the present invention, the backward lighting subsystem provides the road surface lighting under normal weather conditions, its radiation manner is backward radiation without upward scattering, which greatly increases the road surface luminance along the driver sight line direction, greatly reduces the glare, and significantly increases the longitudinal uniformity. When the forward lighting subsystem that provides the space lighting under normal weather conditions is used in combination with the backward lighting subsystem, the visibility of the obstacles ahead can be increased by enhancing the luminance contrast and color contrast between the obstacles and the road surface background. These are not disclosed in the low-position installed road lamp technology of China Patent No. 200720095548.4.

In essence, the multi-dimensional road lighting system of the present invention realizes multiple dimensions of illumination by means of distributed lamp arrangement and small power of the lamps. The multiple dimensions of lighting subsystems include light sources with different radiation directions. Different light sources are combined for illumination depending on actual requirements. The light sources for different purposes each perform its own function and maximize its own performance, thus optimizing the illumination result. For example, the backward lighting is used as basic lighting and is constantly activated during the normal light-on period. The forward lighting acting as space lighting is activated in some time-sections during the normal light-on period. The lateral lighting is only used as an auxiliary lighting which is deactivated under normal weather conditions but is only activated under rain, fog, smoke and haze conditions to increase the visibility under complicated weather conditions. The present invention fundamentally addresses the glare and invalid illumination issue and has good photometry indexes, thus reducing energy consumption.

The following table shows a technical comparison between the multi-dimensional road lighting type of the present invention and other lighting type.

| | Main Features | Current Lighting Type | LED Road Fence Lamp Lighting | Multi-dimensional Road lighting System |
|---|---|---|---|---|
| 1 | Illumination Manner | Single Dimension | Single Dimension | Multiple Dimensions |
| 2 | Height of lamp | Single Lamp Position (High-position) | Single Lamp Position (Low-position) | Multi Lamp Positions (Low-position, Middle-position) |
| 3 | Lamp Pole | Yes | No | No |
| 4 | Light Source | Single Light Source | Single Light Source | Multiple Light Sources |
| 5 | Color | Single Color | Single Color | Multiple Colors |
| 6 | Control | Operate Non-independently | Operate Non-independently | Operate Independently |
| 7 | Front-view Glare | Yes | Yes | No |
| 8 | Rear-view Glare | Yes | Yes | No |
| 9 | Dedicated Haze Illumination | No | No | Yes |
| 10 | Indicator Illumination | No | No | Yes |

Expected return: the multi-dimensional road lighting system has the apparent energy-saving, glare-free and low cost advantages.

The following table compares technical and economic indexes of the HID lamp and LED lamp between the multi-dimensional road lighting and the current illumination manner.

|  | Main Indexes | Current HID Lamp Lighting | Current LED Road Lamp | Multi-dimensional Road lighting System |
|---|---|---|---|---|
| 1 | Lamp Arrangement Manner | Concentrated | Concentrated | Distributed |
| 2 | Lamp Size | Large Scale | Large Scale | Small Scale |
| 3 | Single Lamp Power W | 250 | 150 | 2-8 |
| 4 | Power Line Density W/M | 8.33 | 5 | 2.5 |
| 5 | System Optical Performance (Rated) lm/W | 105 | 120 | 120 |
| 6 | Total Luminous Line Density lm/M | 88 | 60 | 30 |
| 7 | Energy Saving Rate In Comparison With Current HID Lamp % | 0 | 40 | 70 |
| 8 | Energy Saving Rate In Comparison With Current LED Lamp % | --- | 0 | 50 |
| 9 | Linear Density of Cost Yuan/M | 360 | 400 | 120 |
| 10 | Glare (Front-view, Rear-view) | Yes | Yes | No |
| 11 | Road Surface Luminance (Average) | Meet National Standard | Meet National Standard | Meet National Standard |
| 12 | Longitudinal Uniformity Of Luminance | Poor | Poor | Good |
| 13 | Vertical Uniformity of illuminance | Poor | Poor | Good |
| 14 | LED - Photovoltaic Integration | Unreliable | Unreliable | Reliable |
| 15 | Heat Dissipation Issue | Yes | Yes | No |
| Note: the energy saving rate is calculated in the normal operation mode under the non-haze conditions; maintenance fees are not included. | | | | |

In summary, the present invention takes advantages of the small power and high performance of the LED light source and is a result of independent application-type research and development which is based on plenty of experiments under advanced illumination theories. The multi-dimensional road lighting system does not merely improve and correct the current road lighting, but is a fundamental innovation to the road lighting type and lighting devices. In comparison with the prior art, the multi-dimensional road lighting system of the present invention includes ten comparatively perfect subsystems which can at the same time or selectively provide multiple dimensions of space lighting. The present invention can be used in highways, municipal roads and tunnels. The present invention is capable of addressing the disadvantages of the traditional lighting type with high-position installed lamp and the current lighting type with low-position installed lamp. The present invention addresses the issues of glare, invalid illumination and poor longitudinal uniformity, significantly increases the lighting efficiency and power consumption and, at the same time, provides good road lighting photometry indexes and excellent cost/performance ratio, which shows the apparent advanced nature of the present invention. The multi-dimensional road lighting system can be used in lighting of new roads as well as reconstruction of existing road lamp systems.

**Claims**

1. A multi-dimensional road lighting system comprising a multi-dimensional lighting type and a luminaire dedicated for the multi-dimensional lighting, the multi-dimensional road lighting system being used in highway, municipal road and tunnel lighting, wherein the multi-dimensional road lighting system comprises multiple dimensions of lighting subsystems including at least one dimension of backward lighting subsystem (3), one dimension of forward lighting subsystem(6) and one dimension of lateral lighting subsystem (8), each dimension of lighting subsystem is formed by a physical light source, a light projecting direction of the backward lighting subsystem (3) is opposite to the driving direction of a lane, a light projecting direction of the forward lighting subsystem (6) is the same as the driving direction of the lane, and a light projecting direction of the lateral lighting subsystem is perpendicular to the driving direction of the lane; the backward lighting subsystem (3) comprises a backward lighting subsystem with low-position installed lamp, a height of lamp of the backward lighting subsystem with low-position installed lamp is lower than 1.5m; for highway, municipal road and tunnel lighting, the backward lighting subsystem with low-position installed lamp has a horizontal radiation range of 90° to 180° and 180° to 270°, a vertical radiation range of 180° to 220° with respect to the driving direction, and a radiation space below the light source without upward scattering; **characterized in that**, for the tunnel lighting, the backward lighting subsystem (3) further comprises a backward lighting subsystem with high-position installed lamp, a height of lamp of the backward lighting subsystem with high-position installed lamp is higher than 1.5m, wherein, for the tunnel lighting, the backward lighting subsystem with high-position installed lamp has a horizontal radiation range of 90° to 270°, a vertical radiation range of 140° to 180° with respect to the driving direction, and a radiation space above the lamp without downward scattering.

2.  The multi-dimensional road lighting system of claim 1, wherein the forward lighting subsystem has a horizontal radiation range of 0° to 90° and 270° to 360°, a vertical radiation range of 350° to 40° with respect to the driving direction, and a radiation space mainly above the luminaire.

3.  The multi-dimensional road lighting system of claim 1, wherein the lateral lighting subsystem has a horizontal radiation range of 0° to 180° and 180° to 360°, a vertical radiation range of 90° to 270° and 270° to 90° with respect to the driving direction, and a radiation space including spaces above and below the lamp and a road surface.

4.  The multi-dimensional road lighting system of claim 1, wherein when the lighting system is used in a highway or a municipal road, the lighting system further includes a dimension of vertical lighting subsystem, a light projecting direction of the vertical lighting subsystem is perpendicular to the road surface, and the vertical lighting subsystem has a radiation range of 87° to 93° with respect to the driving direction and a radiation space above the road.

5.  The multi-dimensional road lighting system of claim 4, wherein the multiple dimensions of lighting subsystems are divided into multiple groups, with each group of the lighting subsystems separately disposed or integrated together; operation modes of the lighting subsystems include a normal mode and an abnormal mode; the normal mode includes a general mode and an energy-saving mode; the abnormal mode includes an urgent mode and an indication mode, in the normal mode, when the lighting system is used in the tunnel lighting, the general mode is that the backward lighting subsystem, the forward lighting subsystem and the lateral lighting subsystem operate in full power within a normal light-on period; when the lighting system is used in highway and municipal road lighting, the general mode is that the backward lighting subsystem and forward lighting subsystem operate in full power within a normal light-on period; in the energy-saving mode, a light adjustment is performed on the basis of the general mode; in the abnormal mode, when the lighting system is used in highway and municipal road lighting, the urgent mode is that the lateral lighting subsystem is activated under haze weather conditions or in urgent situations, and the indication mode is that the vertical lighting subsystem is activated when indication illumination is needed.

6.  The multi-dimensional road lighting system of any one of claim 1 to claim 5, wherein the luminaire includes a lamp body, a device body, and a pipeline, the lamp body includes a light source and a fixing device, the device body includes a power supply circuit, a driving circuit or a photovoltaic system, a control circuit and a fixing device; the pipeline includes a conductive wire and a protective tube; the luminaire is specially used in the multi-dimensional road lighting system for highway, municipal road and tunnel lighting, the light source at least includes a backward lighting light source, a forward lighting light source and a lateral lighting light source, a light projecting direction of the backward lighting light source is opposite to the driving direction, a light projecting direction of the forward lighting light source is the same as the driving direction, and the light projecting direction of the lateral lighting light source is perpendicular to the driving direction.

7.  The multi-dimensional road lighting system of claim 6, wherein the power of the backward lighting light source is not greater than 8W, the color temperature is not higher than 4000K, and the backward lighting light source has an asymmetric distribution curve flux; the power of the forward lighting light source is not greater than 8W, the color temperature is higher than 4000K, and the forward lighting light source has an asymmetric distribution curve flux, and the color rendering index is greater than 70; the power of the lateral lighting subsystem is not greater than 10W, and the color temperature is lower than 5000K.

**8.** The multi-dimensional road lighting system of claim 6, wherein when the luminaire is used in the highway and municipal road, multiple groups of lamp bodies may be arranged according to needs, which are distributed along two sides of the road, a mounting spacing between two adjacent groups of lamp bodies is not greater than 10m, the lamp body is mounted at a height not higher than 4m, the position of the backward lighting light source is lower than 1.5m, and a top cut-off plate is disposed above the backward lighting light source.

**9.** The multi-dimensional road lighting system of claim 6, wherein the luminaire is used in the highway or municipal road, the light source further includes a vertical lighting light source which has a power not higher than 10W and a mounting interval not greater than 2Km.

**10.** The multi-dimensional road lighting system of claim 6, wherein the fixing device of the lamp body includes a lamp housing, the light sources are mounted on the lamp housing, the backward lighting light source, the forward lighting light source, and the lateral lighting light source are disposed on a front side of the lamp housing, the backward lighting light source and the forward lighting light source are symmetrically disposed on left and right sides of the lateral lighting light source or on top and bottom sides of the lateral illumination

**11.** The multi-dimensional road lighting system of claim 6, wherein when the luminaire is used in a municipal road, the lamp body further includes an apparatus and light source for information display and landscape illumination, the light sources for different purposes operate independently.

**12.** The multi-dimensional road lighting system of claim 6, wherein when the luminaire is used in a tunnel, the mounting spacing between adjacent lamp bodies is not greater than 5m, the backward lighting light source includes a backward lighting light source with low-position installed lamp and a backward lighting light source with high-position installed lamp, the lamp body further includes a high-position lamp body and a low-position lamp body; the high-position light body includes a bottom cut-off plate below the light source with high-position installed lamp; the low-position lamp body includes a top cut-off plate above the backward lighting light source with low-position installed lamp.

**13.** The multi-dimensional road lighting system of claim 6, wherein front-view glare is eliminated by providing an appropriate light distribution of the luminaire, providing the luminaire with top and/or bottom cut-off plates, and adding a shutter type anti-glare grid on a center median strip; rear-view glare is eliminated by reducing the luminance of the forward lighting light source of the luminaire; residence glare is eliminated by providing the luminaire with the top cut-off plate.

**Patentansprüche**

**1.** Mehrdimensionales Straßenbeleuchtungssystem, umfassend einen mehrdimensionalen Beleuchtungstyp und eine für die mehrdimensionale Beleuchtung bestimmte Leuchte, wobei das mehrdimensionale Straßenbeleuchtungssystem in der Straßen-, Stadtstraßen- und Tunnelbeleuchtung verwendet wird, wobei das mehrdimensionale ein Straßenbeleuchtungssystem umfasst mehrere Dimensionen von Beleuchtungssubsystemen, einschließlich mindestens einer Dimension eines Rückwärtsbeleuchtungssubsystems (3), einer Dimension eines Vorwärtsbeleuchtungssubsystems (6) und einer Dimension eines seitlichen Beleuchtungssubsystems (8), wobei jede Dimension des Beleuchtungssubsystems gebildet wird eine physikalische Lichtquelle, wobei eine Lichtprojektionsrichtung des Rückwärtsbeleuchtungsteilsystems (3) der Fahrtrichtung einer Fahrbahn entgegengesetzt ist, eine Lichtprojektionsrichtung des Vorwärtsbeleuchtungsteilsystems (6) der Fahrtrichtung der Spur entspricht, und eine Lichtprojektionsrichtung des seitlichen Beleuchtungssubsystems ist senkrecht zur Fahrtrichtung der Fahrspur; das Rückwärtsbeleuchtungsteilsystem (3) umfasst ein Rückwärtsbeleuchtungsteilsystem mit installierter Niederpositionslampe, wobei eine Lampenhöhe des Rückwärtsbeleuchtungsteilsystems mit Niederpositionsinstallation niedriger als 1,5 m ist; Für die Beleuchtung von Autobahnen, städtischen Straßen und Tunneln hat das Teilsystem für die Rückwärtsbeleuchtung mit eingebauter Niederpositionslampe einen horizontalen Strahlungsbereich von 90 ° bis 180 ° und 180 ° bis 270 °, einen vertikalen Strahlungsbereich von 180 ° bis 220 ° in Bezug auf die Fahrtrichtung und einen Strahlungsraum unterhalb der Lichtquelle ohne Aufwärtsstreuung; **dadurch gekennzeichnet, dass** für die Tunnelbeleuchtung das Rückwärtslicht-Teilsystem (3) ferner ein Rückwärtslicht-Teilsystem mit eingebauter Hochpositionslampe umfasst, wobei eine Lampenhöhe des Rückwärtslicht-Teilsystems mit Hochpositionslicht höher als 1,5 m ist, wobei für die Tunnelbeleuchtung das Rückwärtslicht-Subsystem mit eingebauter Hochpositionslampe einen horizontalen Strahlungsbereich von 90 ° bis 270 °, einen vertikalen Strahlungsbereich von 140 ° bis 180 ° in Bezug auf die Fahrtrichtung und einen Strahlungsraum aufweist über der Lampe ohne Abwärtsstreuung.

2. Mehrdimensionales Straßenbeleuchtungssystem nach Anspruch 1, wobei das Vorwärtsbeleuchtungssubsystem einen horizontalen Strahlungsbereich von 0 ° bis 90 ° und 270 ° bis 360 ° und einen vertikalen Strahlungsbereich von 350 ° bis 40 ° in Bezug auf den aufweist Fahrtrichtung und ein Strahlungsraum hauptsächlich über der Leuchte.

3. Mehrdimensionales Straßenbeleuchtungssystem nach Anspruch 1, wobei das seitliche Beleuchtungssubsystem einen horizontalen Strahlungsbereich von 0 ° bis 180 ° und 180 ° bis 360 °, einen vertikalen Strahlungsbereich von 90 ° bis 270 ° und 270 ° bis 90 ° aufweist in Bezug auf die Fahrtrichtung und einen Strahlungsraum mit Räumen oberhalb und unterhalb der Lampe und einer Straßenoberfläche.

4. Mehrdimensionales Straßenbeleuchtungssystem nach Anspruch 1, wobei, wenn das Beleuchtungssystem in einer Autobahn oder einer städtischen Straße verwendet wird, das Beleuchtungssystem ferner eine Abmessung des vertikalen Beleuchtungssubsystems und eine Lichtprojektionsrichtung des vertikalen Beleuchtungssubsystems aufweist senkrecht zur Straßenoberfläche, und das vertikale Beleuchtungssubsystem hat einen Strahlungsbereich von 87 ° bis 93 ° in Bezug auf die Fahrtrichtung und einen Strahlungsraum über der Straße.

5. Mehrdimensionales Straßenbeleuchtungssystem nach Anspruch 4, wobei die mehreren Dimensionen von Beleuchtungssubsystemen in mehrere Gruppen unterteilt sind, wobei jede Gruppe der Beleuchtungssubsysteme separat angeordnet oder zusammen integriert ist; Betriebsmodi der Beleuchtungssubsysteme umfassen einen normalen Modus und einen anomalen Modus; der Normalmodus umfasst einen allgemeinen Modus und einen Energiesparmodus; Der anormale Modus umfasst einen Dringlichkeitsmodus und einen Anzeigemodus. Im Normalmodus wird bei Verwendung des Beleuchtungssystems bei der Tunnelbeleuchtung der allgemeine Modus so ausgeführt, dass das Rückwärtsbeleuchtungsteilsystem, das Vorwärtsbeleuchtungsteilsystem und das Seitenbeleuchtungsteilsystem vollständig arbeiten Stromversorgung innerhalb einer normalen Leuchtphase; Wenn das Beleuchtungssystem bei Straßen- und Kommunalstraßenbeleuchtung verwendet wird, ist der allgemeine Modus, dass das Rückwärtsbeleuchtungsteilsystem und das Vorwärtsbeleuchtungsteilsystem innerhalb einer normalen Leuchtphase mit voller Leistung arbeiten. Im Energiesparmodus wird eine Lichteinstellung auf der Grundlage des allgemeinen Modus durchgeführt. Im anormalen Modus, wenn das Beleuchtungssystem in der Straßen- und Stadtstraßenbeleuchtung verwendet wird, ist der dringende Modus, dass das seitliche Beleuchtungssubsystem unter Dunstwetterbedingungen oder in dringenden Situationen aktiviert wird, und der Anzeigemodus ist, dass das vertikale Beleuchtungssubsystem aktiviert ist wenn Anzeigebeleuchtung benötigt wird.

6. Mehrdimensionales Straßenbeleuchtungssystem nach einem der Ansprüche 1 bis 5, wobei die Leuchte einen Lampenkörper, einen Vorrichtungskörper und eine Rohrleitung umfasst, wobei der Lampenkörper eine Lichtquelle und eine Fixiervorrichtung den Vorrichtungskörper umfasst eine Stromversorgungsschaltung, eine Treiberschaltung oder ein Photovoltaiksystem, eine Steuerschaltung und eine Fixiereinrichtung umfasst; die Rohrleitung umfasst einen leitfähigen Draht und ein Schutzrohr; Die Leuchte wird speziell in dem mehrdimensionalen Straßenbeleuchtungssystem für die Straßen-, Stadtstraßen- und Tunnelbeleuchtung verwendet. Die Lichtquelle umfasst mindestens eine Rückwärtslichtquelle, eine Vorwärtslichtquelle und eine seitliche Lichtquelle, eine Lichtprojektionsrichtung der Rückwärtsbeleuchtungslichtquelle ist entgegen der Antriebsrichtung, eine Lichtprojektionsrichtung der Vorwärtsbeleuchtungslichtquelle ist die gleiche wie die Antriebsrichtung, und die Lichtprojektionsrichtung der seitlichen Beleuchtungslichtquelle ist senkrecht zur Antriebsrichtung.

7. Mehrdimensionales Straßenbeleuchtungssystem nach Anspruch 6, wobei die Leistung der Rückwärtsbeleuchtungslichtquelle nicht größer als 8 W ist, die Farbtemperatur nicht höher als 4000 K ist und die Rückwärtsbeleuchtungslichtquelle einen asymmetrischen Verteilungskurvenfluss aufweist; Die Leistung der Vorwärtsbeleuchtungslichtquelle ist nicht größer als 8 W, die Farbtemperatur ist höher als 4000 K und die Vorwärtsbeleuchtungslichtquelle weist einen asymmetrischen Verteilungskurvenfluss auf und der Farbwiedergabeindex ist größer als 70; Die Leistung des seitlichen Beleuchtungs-Subsystems beträgt nicht mehr als 10 W und die Farbtemperatur liegt unter 5000 K.

8. Mehrdimensionales Straßenbeleuchtungssystem nach Anspruch 6, wobei, wenn die Leuchte in der Autobahn und in der Stadtstraße verwendet wird, mehrere Gruppen von Lampenkörpern nach Bedarf angeordnet werden können, wobei entlang zweier Seiten der Straße eine Halterung angeordnet ist Der Abstand zwischen zwei benachbarten Gruppen von Lampenkörpern ist nicht größer als 10 m, der Lampenkörper ist in einer Höhe von nicht mehr als 4 m montiert, die Position der rückwärtigen Beleuchtungslichtquelle ist niedriger als 1,5 m und eine obere Trennplatte ist angeordnet über der Lichtquelle für Rückwärtsbeleuchtung.

9. Mehrdimensionales Straßenbeleuchtungssystem nach Anspruch 6, wobei die Leuchte in der Autobahn oder Stadtstraße verwendet wird, die Lichtquelle ferner eine vertikale Beleuchtungslichtquelle umfasst, die eine Leistung von nicht mehr als 10 W und ein Montageintervall von nicht mehr als hat 2 km.

**10.** Mehrdimensionales Straßenbeleuchtungssystem nach Anspruch 6, wobei die Befestigungsvorrichtung des Lampenkörpers ein Lampengehäuse umfasst, wobei die Lichtquellen an dem Lampengehäuse angebracht sind, die Rückwärtslichtlichtquelle, die Vorwärtslichtlichtquelle und die Eine seitliche Beleuchtungslichtquelle ist an einer Vorderseite des Lampengehäuses angeordnet, die rückwärtige Beleuchtungslichtquelle und die Vorwärtsbeleuchtungslichtquelle sind symmetrisch an der linken und rechten Seite der seitlichen Beleuchtungslichtquelle oder an der oberen und unteren Seite der seitlichen Beleuchtung angeordnet.

**11.** Mehrdimensionales Straßenbeleuchtungssystem nach Anspruch 6, wobei, wenn die Leuchte in einer städtischen Straße verwendet wird, der Lampenkörper ferner eine Vorrichtung und eine Lichtquelle für Informationsanzeige und Landschaftsbeleuchtung umfasst, wobei die Lichtquellen für verschiedene Zwecke unabhängig voneinander arbeiten.

**12.** Mehrdimensionales Straßenbeleuchtungssystem nach Anspruch 6, wobei, wenn die Leuchte in einem Tunnel verwendet wird, der Montageabstand zwischen benachbarten Lampenkörpern nicht größer als 5 m ist, die Rückwärtslichtlichtquelle eine Rückwärtslichtlichtquelle mit niedrigem positionierte Lampe und rückwärtige Beleuchtungslichtquelle mit installierter Lampe mit hoher Position, der Lampenkörper umfasst ferner einen Lampenkörper mit hoher Position und einen Lampenkörper mit niedriger Position; der Hochpositionslichtkörper enthält eine untere Abschneidplatte unter der Lichtquelle mit einer Hochpositionslampe; Der Niedrigpositionslampenkörper umfasst eine obere Trennplatte oberhalb der rückwärts beleuchtenden Lichtquelle mit einer Niedrigpositionslampe.

**13.** Mehrdimensionales Straßenbeleuchtungssystem nach Anspruch 6, wobei die Frontsichtblendung durch Vorsehen einer angemessenen Lichtverteilung der Leuchte, Versehen der Leuchte mit oberen und / oder unteren Abschneidplatten und Hinzufügen eines Verschlussblendentyps beseitigt wird - Blendgitter auf einem mittleren Mittelstreifen; Rückblendung wird eliminiert, indem die Leuchtdichte der nach vorne gerichteten Lichtquelle der Leuchte reduziert wird; Die Blendung wird vermieden, indem die Leuchte mit der oberen Abschlussplatte versehen wird.

## Revendications

**1.** Un système d'éclairage routier multidimensionnel comprenant un type d'éclairage multidimensionnel et un luminaire dédié à l'éclairage multidimensionnel, le système d'éclairage routier multidimensionnel étant utilisé dans l'éclairage des routes, des routes communales et des tunnels, dans lequel le système d'éclairage multidimensionnel Le système d'éclairage routier comprend de multiples dimensions de sous-systèmes d'éclairage comprenant au moins une dimension de sous-système d'éclairage arrière (3), une dimension de sous-système d'éclairage avant (6) et une dimension de sous-système d'éclairage latéral (8), chaque dimension de sous-système d'éclairage étant formée par une source de lumière physique, une direction de projection de lumière du sous-système d'éclairage arrière (3) est opposée au sens de conduite d'une voie, une direction de projection de lumière du sous-système d'éclairage avant (6) est identique à la direction de conduite de la voie, et une direction de projection de lumière du sous-système d'éclairage latéral est perpendiculaire à la direction de conduite de la voie; le sous-système d'éclairage arrière (3) comprend un sous-système d'éclairage arrière avec une lampe installée en position basse, la hauteur de la lampe du sous-système d'éclairage arrière avec une lampe installée en position basse est inférieure à 1,5 m; pour l'éclairage des routes, des routes et des tunnels municipaux, le sous-système d'éclairage vers l'arrière avec lampe installée en position basse a une plage de rayonnement horizontal de 90 ° à 180 ° et de 180 ° à 270 °, une plage de rayonnement vertical de 180 ° à 220 ° par rapport à la direction de conduite et un espace de rayonnement sous la source de lumière sans diffusion vers le haut; **caractérisé en ce que**, pour l'éclairage de tunnel, le sous-système d'éclairage arrière (3) comprend en outre un sous-système d'éclairage arrière avec une lampe installée en position haute, la hauteur de la lampe du sous-système d'éclairage arrière avec une lampe installée en position haute est supérieure à 1,5 m, dans lequel, pour l'éclairage de tunnel, le sous-système d'éclairage vers l'arrière avec lampe installée en position haute présente une plage de rayonnement horizontal de 90 ° à 270 °, une plage de rayonnement vertical de 140 ° à 180 ° par rapport au sens de la conduite et un espace de rayonnement au-dessus de la lampe sans diffusion vers le bas.

**2.** Système d'éclairage routier multidimensionnel selon la revendication 1, dans lequel le sous-système d'éclairage avant a une plage de rayonnement horizontal de 0 ° à 90 ° et de 270 ° à 360 °, une plage de rayonnement vertical de 350 ° à 40 ° par rapport à la direction de conduite et un espace de rayonnement principalement au-dessus du luminaire.

3. Système d'éclairage routier multidimensionnel selon la revendication 1, dans lequel le sous-système d'éclairage latéral a une plage de rayonnement horizontal de 0 ° à 180 ° et de 180 ° à 360 °, une plage de rayonnement vertical de 90 ° à 270 ° et de 270 ° à 90 ° par rapport au sens de la marche et un espace de rayonnement comprenant des espaces situés au-dessus et au-dessous du feu et une surface de roulement.

4. Système d'éclairage multidimensionnel de la route selon la revendication 1, dans lequel, lorsque le système d'éclairage est utilisé sur une route ou une route municipale, le système d'éclairage comprend en outre une dimension de sous-système d'éclairage vertical, une direction de projection de lumière du sous-système d'éclairage vertical est: perpendiculaire à la chaussée, et le sous-système d'éclairage vertical a une plage de rayonnement de 87 ° à 93 ° par rapport à la direction de conduite et un espace de rayonnement au-dessus de la route.

5. Système d'éclairage routier multidimensionnel selon la revendication 4, dans lequel les multiples dimensions des sous-systèmes d'éclairage sont divisées en plusieurs groupes, chaque groupe des sous-systèmes d'éclairage étant séparément disposé ou intégré ensemble; Les modes de fonctionnement des sous-systèmes d'éclairage comprennent un mode normal et un mode anormal; le mode normal comprend un mode général et un mode d'économie d'énergie; le mode anormal comprend un mode urgent et un mode indication, en mode normal, lorsque le système d'éclairage est utilisé dans l'éclairage de tunnel, le mode général consiste en ce que le sous-système d'éclairage arrière, le sous-système d'éclairage avant et le sous-système d'éclairage latéral fonctionnent pleinement pouvoir au cours d'une période d'allumage normale; lorsque le système d'éclairage est utilisé pour l'éclairage des routes et des routes municipales, le mode général est que les sous-systèmes d'éclairage arrière et d'éclairage avant fonctionnent à pleine puissance pendant une période d'allumage normale; en mode économie d'énergie, un réglage de la lumière est effectué sur la base du mode général; en mode anormal, lorsque le système d'éclairage est utilisé dans des éclairages routiers et municipaux, le mode urgent consiste à activer le sous-système d'éclairage latéral dans des conditions de brouillard ou dans des situations urgentes, et le mode d'indication indique que le sous-système d'éclairage vertical est activé lorsque l'éclairage d'indication est nécessaire.

6. Système d'éclairage routier multidimensionnel selon l'une quelconque des revendications 1 à 5, dans lequel le luminaire comprend un corps de lampe, un corps de dispositif et un pipeline, le corps de lampe comprenant une source de lumière et un dispositif de fixation, le corps de dispositif comprend un circuit d'alimentation, un circuit de commande ou un système photovoltaïque, un circuit de commande et un dispositif de fixation; le pipeline comprend un fil conducteur et un tube de protection; le luminaire est spécialement utilisé dans le système d'éclairage routier multidimensionnel pour l'éclairage des routes, des routes et des tunnels municipaux. La source de lumière comprend au moins une source de lumière arrière, une source de lumière frontale et une source de lumière latérale, une direction de projection de la lumière de la source de lumière d'éclairage arrière est opposée au sens de la conduite, une direction de projection de lumière de la source de lumière d'éclairage avant est identique à la direction de conduite et la direction de projection de lumière de la source de lumière latérale est perpendiculaire au sens de conduite.

7. Système d'éclairage routier multidimensionnel selon la revendication 6, dans lequel la puissance de la source lumineuse d'éclairage arrière n'est pas supérieure à 8 W, la température de couleur n'est pas supérieure à 4 000 K et la source lumineuse d'éclairage arrière a un flux de courbe de distribution asymétrique; la puissance de la source lumineuse d'éclairage avant n'est pas supérieure à 8 W, la température de couleur est supérieure à 4 000 K, et la source lumineuse d'éclairage avant a un flux de courbe de distribution asymétrique et l'indice de rendu des couleurs est supérieur à 70; la puissance du sous-système d'éclairage latéral n'est pas supérieure à 10W et la température de couleur est inférieure à 5 000K.

8. Système d'éclairage multidimensionnel de la route selon la revendication 6, dans lequel, lorsque le luminaire est utilisé dans les autoroutes et les routes municipales, plusieurs groupes de corps de lampe peuvent être disposés en fonction des besoins, répartis le long des deux côtés de la route, un montage l'espacement entre deux groupes adjacents de corps de lampe ne dépasse pas 10 m, le corps de lampe est monté à une hauteur ne dépassant pas 4 m, la position de la source de lumière arrière est inférieure à 1,5 m et une tôle coupée supérieure est disposée au-dessus de la source d'éclairage arrière.

9. Système d'éclairage multidimensionnel de la route selon la revendication 6, dans lequel le luminaire est utilisé sur une route ou une route municipale, la source lumineuse comprend en outre une source lumineuse d'éclairage vertical qui a une puissance non supérieure à 10W et un intervalle de montage inférieur à 2 km.

10. Système d'éclairage routier multidimensionnel selon la revendication 6, dans lequel le dispositif de fixation du corps de lampe comprend un logement de lampe, les sources de lumière étant montées sur le logement de lampe, la source de lumière arrière, la source de lumière avant et des sources lumineuses latérales sont disposées à l'avant du boîtier de lampe, la source lumineuse à rétroéclairage et la source lumineuse avant sont disposées symétriquement à gauche et à droite de la source lumineuse latérale ou des côtés supérieur et inférieur de l'éclairage lateral.

11. Système d'éclairage routier multidimensionnel selon la revendication 6, dans lequel, lorsque le luminaire est utilisé sur une route municipale, le corps de lampe comprend en outre un appareil et une source de lumière pour l'affichage d'informations et l'éclairage de paysage, les sources de lumière à des fins différentes fonctionnent indépendamment.

12. Système d'éclairage routier multidimensionnel selon la revendication 6, dans lequel, lorsque le luminaire est utilisé dans un tunnel, l'espacement de montage entre les corps de lampe adjacents n'est pas supérieur à 5 m, la source de lumière de recul comprend une source de lumière de recul à faible intensité. une lampe installée en position et une source de lumière d'éclairage arrière avec une lampe installée en position haute, le corps de la lampe comprend en outre un corps de lampe en position haute et un corps de lampe en position basse; le corps de feu de position haute comprend une plaque coupée inférieure sous la source de lumière avec une lampe installée en position haute; le corps de lampe à position basse comprend une plaque coupée supérieure au-dessus de la source lumineuse d'éclairage arrière avec lampe installée à position basse.

13. Système d'éclairage multidimensionnel selon la revendication 6, **caractérisé en ce que** l'éblouissement par la vue de face est éliminé en fournissant une répartition lumineuse appropriée du luminaire, en fournissant au luminaire des plaques de coupure supérieure et / ou inférieure et en ajoutant un obturateur du type anti grille anti-éblouissement sur une bande médiane centrale; les reflets arrière sont éliminés en réduisant la luminance de la source de lumière frontale du luminaire; l'éblouissement est éliminé en dotant le luminaire de la plaque supérieure découpée.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

Fig. 21

Fig. 22

Fig. 23

Fig. 24

Fig. 25

Fig. 26

Fig. 27

Fig. 28

Fig. 29

Fig. 30

Fig. 31

Fig. 32

Fig. 33

Fig. 34

Fig. 35

Fig. 36

Fig. 37

1 - Alee-tree
2 - center line floor lamp

Fig. 38

1 - Alee-tree
2 - center line floor lamp
3 - broadside floor lamp

Fig. 39

前方有事故请走XX路

Fig. 40

driving direction

louvered anti-glare isolation

driving direction

Fig. 41

Fig. 42

Fig. 43

Fig. 44

Fig. 45

Fig. 46

100

120

120

110

130

110

130

110

112

110

Fig. 47

Fig. 48

Fig. 49

Fig. 50

EP 2 896 875 B1

Fig. 51      Fig. 52      Fig. 53      Fig. 54

Fig. 55      Fig. 56      Fig. 57

Fig. 58

Fig. 59

38

1 - alee-tree
2 - center line straddle lamp

Fig. 60

Fig. 61

Fig. 62

Fig. 63

Fig. 64

**EP 2 896 875 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011235333 A1
- FR 749953 A
- FR 749910 A
- WO 9833007 A1
- WO 2011092107 A1
- EP 2148129 A1
- JP 2002170401 A
- WO 2009121589 A1
- CN 201110175282
- CN 200720095548